(19) Europäisches Patentamt
European Patent Office
Office européen des brevets

(11) **EP 3 542 211 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.09.2025 Patentblatt 2025/36**

(45) Hinweis auf die Patenterteilung:
**08.04.2020 Patentblatt 2020/15**

(21) Anmeldenummer: **17818146.7**

(22) Anmeldetag: **20.12.2017**

(51) Internationale Patentklassifikation (IPC):
*G02C 13/00* (2006.01)    *G06T 7/10* (2017.01)
*G06K 9/46* (2006.01)    *G06T 7/12* (2017.01)
*G06T 7/149* (2017.01)    *G06K 9/00* (2022.01)

(52) Gemeinsame Patentklassifikation (CPC):
**G02C 13/003; G02C 13/005; G06T 7/12;
G06T 7/149; G06V 40/171;** G06T 2207/10012;
G06T 2207/10024; G06T 2207/10028

(86) Internationale Anmeldenummer:
**PCT/EP2017/083908**

(87) Internationale Veröffentlichungsnummer:
**WO 2018/137863 (02.08.2018 Gazette 2018/31)**

(54) **VERFAHREN UND VORRICHTUNG SOWIE COMPUTERPROGRAMM ZUM ERMITTELN EINER REPRÄSENTATION EINES BRILLENGLASRANDS**

METHOD AND DEVICE AND COMPUTER PROGRAM FOR DETERMINING A REPRESENTATION OF A SPECTACLE GLASS RIM

PROCÉDÉ ET DISPOSITIF AINSI QUE PROGRAMME INFORMATIQUE DESTINÉS À DÉTERMINER UNE REPRÉSENTATION D'UN BORD DE VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2017 EP 17153651**

(43) Veröffentlichungstag der Anmeldung:
**25.09.2019 Patentblatt 2019/39**

(73) Patentinhaber:
• **Carl Zeiss AG**
  **73447 Oberkochen (DE)**
• **Carl Zeiss Vision International GmbH**
  **73430 Aalen (DE)**

(72) Erfinder:
• **NIEUWENHUIS, Claudia**
  **D-73431 Aalen (DE)**
• **SCHWARZ, Oliver**
  **73479 Ellwangen (DE)**

(74) Vertreter: **Glawe, Delfs, Moll**
  **Partnerschaft mbB**
  **Hopfenmarkt 33**
  **20457 Hamburg (DE)**

(56) Entgegenhaltungen:
WO-A1-2014/198888    DE-A1- 102009 004 383
DE-A1- 102011 115 239    DE-A1- 102014 013 447
US-A- 4 852 184    US-A1- 2016 246 078
US-A1- 2016 299 360

• ZHONG JING ET AL.: "Glasses Detection and Extraction by Deformable Contour", PROCEEDINGS 15TH INTERNATIONAL CONFERENCE ON PATTERN RECOGNITION. ICPR-2000, vol. 2, 2000, Barcelona, Spain, pages 933 - 936, XP010533966, DOI: 10.1109/ICPR.2000.906227

• PAUL URTHALER: "Glasses detection and segmentation from face portrait images", MASTER'S THESIS, GRAZ UNIVERSITY OF TECHNOLOGY, 1 December 2008 (2008-12-01), Graz University of Technology, XP055641092, Retrieved from the Internet <URL:https://www.tugraz.at/fileadmin/user_upload/Institute/ICG/Images/team_bischof/mib/paper_pdfs/StudentsMasterTheses/DA_urthaler.pdf> [retrieved on 20191111]

EP 3 542 211 B2

**(Forts. nächste Seite)**

- CLAUDIA NIEUWENHUIS ET AL.: "Spatially Varying Color Distributions for Interactive Multilabel Segmentation", IEEE TRANSACTIONS ON PATTERN ANALYSIS AND MACHINE INTELLIGENCE, IEEE COMPUTER SOCIETY, vol. 35, no. 5, 1 May 2013 (2013-05-01), USA, pages 1234 - 1247, XP011497447, ISSN: 0162-8828
- CHENYU WU ET AL.: "Automatic eyeglasses removal from face images", IEEE TRANSACTIONS ON PATTERN ANALYSIS AND MACHINE INTELLIGENCE, vol. 26, no. 3, March 2004 (2004-03-01), pages 322 - 336, XP011106115, DOI: 10.1109/TPAMI.2004.1262319
- DIANA BORZA ET AL: "Eyeglasses Lens Contour Extraction from Facial Images Using an Efficient Shape Description", SENSORS, vol. 13, no. 10, 10 October 2013 (2013-10-10), CH, pages 13638 - 13658, XP055227455, ISSN: 1424-8220, DOI: 10.3390/s131013638
- CLAUDIA NIEUWENHUIS ET AL: "Spatially Varying Color Distributions for Interactive Multilabel Segmentation", IEEE TRANSACTIONS ON PATTERN ANALYSIS AND MACHINE INTELLIGENCE, IEEE COMPUTER SOCIETY, USA, vol. 35, no. 5, 17 August 2012 (2012-08-17), pages 1234 - 1247, XP011497447, ISSN: 0162-8828, DOI: 10.1109/TPAMI.2012.183

- CE LIU ET AL: "Automatic eyeglasses removal from face images", IEEE TRANSACTIONS ON PATTERN ANALYSIS AND MACHINE INTELLIGENCE, IEEE COMPUTER SOCIETY, USA, vol. 26, no. 3, 1 March 2004 (2004-03-01), pages 322 - 336, XP011106115, ISSN: 0162-8828, DOI: 10.1109/TPAMI.2004.1262319
- FERNÁNDEZ ALBERTO ET AL: "Glasses detection on real images based on robust alignment", MACHINE VISION AND APPLICATIONS, SPRINGER VERLAG, DE, vol. 26, no. 4, 31 March 2015 (2015-03-31), pages 519 - 531, XP035501562, ISSN: 0932-8092, [retrieved on 20150331], DOI: 10.1007/S00138-015-0674-1

**Beschreibung**

Die Erfindung betrifft ein computerimplementiertes Verfahren und eine Vorrichtung zum Ermitteln einer Repräsentation des Rands wenigstens eines Brillenglases für einen Brillenträger. Darüber hinaus betrifft die Erfindung ein Computerprogramm, mit dem das vorgenannte Verfahren durchgeführt werden kann. Die Erfindung betrifft auch ein Verfahren zum Zentrieren eines linken oder rechten Brillenglases in eine Brillenfassung, ein Verfahren zum Einschleifen eines linken oder rechten Brillenglases in eine Brillenfassung sowie ein Verfahren zum Herstellen eines linken oder rechten Brillenglases und ein Verfahren zum Herstellen einer Brille.

Unter der Repräsentation des Rands eines Brillenglases versteht die Erfindung eine Repräsentation des in der Norm EN ISO 13666:2012 (D/E) in Abschnitt 13.1 aufgeführten Tragrands des Brillenglases.

Eine Repräsentation des Rands eines Brillenglases ist ein Datensatz, aus dem sich der dreidimensionale Verlauf des dem Brillenträger abgewandten Tragrands des Brillenglases gegebenenfalls auf der Grundlage von zusätzlichen das Brillenglas beschreibenden Größen eindeutig bestimmen lässt. Eine Repräsentation des Rands eines Brillenglases kann z. B. die von der Projektion des Rands des Brillenglases in der Bildebene eines Bildsensors einer Bilderfassungseinrichtung umgebene Fläche sein, in die das Brillenglas für die Bilderfassung abgebildet wird.

Bei einer Vollrandbrille entspricht der Tragrand eines Brillenglases einem Brillenfassungsinnenrand. Bei einer Teilrandbrille ist unter dem Tragrand eines Brillenglases zum einen der dem Brillenfassungsinnenrand entsprechende Rand eines Brillenglases und der nicht an die Brillenglasfassung angeschlossene Glasaußenrand zu verstehen. Der Tragrand eines Brillenglases in einer randlosen Brille ist der Glasaußenrand.

Um die Brillengläser korrekt in eine Brillenfassung einzupassen, ist es zum einen erforderlich, sogenannte Zentrierparameter zu bestimmen, damit die optischen Zentren der Gläser mit den visuellen Achsen der entsprechenden Augen in Deckung gebracht werden können, um so z. B. die Information über die Pupillendistanz und die Information über die Höhe der Pupillen in Bezug auf die Brillenfassung zu kennen. Zum anderen ist es erforderlich, den durch die Brillenfassung vorgegebenen Tragrand des Brillenglases zu kennen, in der das Brillenglas aufgenommen werden soll.

Neben der Information der Pupillendistanz und der Information über die Höhe der Pupillen in Bezug auf die Brillenfassung werden unter den Begriff Zentrierparameter insbesondere folgende Größen subsumiert: monokularer Pupillenabstand PD, Hornhautscheitelabstand HS nach Bezugspunktforderung und/oder nach Augendrehpunktforderung, monokularer Zentrierpunktabstand, Zentrierpunktkoordinaten, Scheibenabstand, Dezentration des Zentrierpunktes, Scheibenhöhe und -breite, Scheibenmittenabstand, Brillenglasvorneigung $\alpha$, Fassungsscheibenwinkel $\beta$, Einschleifhöhe.

Die Zentrierparameter werden regelmäßig von einem Augenoptiker bestimmt. Wichtige Zentrierparameter sind z. B. in der Norm EN ISO 13666:2012 (D/E) definiert und können ermittelt werden, indem sich ein Optiker und ein Proband gegenüber stehen oder sitzen, wobei der Proband die Fassung seiner Wahl mit einer darin eingefassten Glasscheibe aufsetzt. Der Proband wird gebeten, in die Ferne zu blicken, und der Optiker zeichnet dann nach Augenschein auf der Scheibe oder auf einer Kontaktstrichfolie mit einem Kreuz den Durchblick an, wie er ihn beim gegenseitigen Anblick erkennt. Dieses Kreuz (Zentrierkreuz) bestimmt dann die Lage des optischen Mittelpunktes des in die Fassung einzusetzenden Brillenglases. Dieses Verfahren wird für jedes der Augen eines Probanden einzeln durchgeführt. Der Abstand der auf diese Weise ermittelten Zentrierkreuze ist der Pupillenabstand PD.

Für die Zentrierparameterbestimmung werden aber mittlerweile auch automatisierte Messsysteme eingesetzt. Ein solches Messsystem ist z. B. in der WO 01/84222 A1 beschrieben. Dieses System enthält eine an einer Säule höhenverstellbar aufgenommene digitale Videokamera, deren Objektiv zusammen mit einem Spiegel und einer Lichtquelle im Bereich der Frontfläche des Gehäuses angeordnet ist. Das System ermöglicht insbesondere das Messen von Abständen und das Erfassen von Maßen, die für das Einschleifen von Brillengläsern zu berücksichtigen sind. In dem System gibt es einen mit der digitalen Videokamera verbundenen Computer, der aus dem Bild eines Brillenträgers mit einer Brillenfassung und mit einem an der Brillenfassung festgelegten Messbügel Zentrierparameter für die Brillenfassung mittels Bildauswertung bestimmt.

Für einen Augenoptiker, der Endkunden berät, ist es wichtig, dass die Zentrierparameterbestimmung möglichst einfach, schnell und zuverlässig durchgeführt werden kann. Damit der Augenoptiker die Endkunden qualitativ hochwertig beraten kann, sind deshalb Arbeitsflüsse von Interesse, die inhärent fehlerfrei sind und die sich zügig durchführen lassen.

In D. Borza et al., Eyeglasses Lens Contour Extraction from Facial Images Using an Efficient Shape Description", Sensors, Bd. 13, Nr. 10, S. 13638 - 13658 (2013) ist ein computerimplementiertes Verfahren der eingangs genannten Art für das Bestimmen des Randes von Brillengläsern in einem erfassten Bild eines Brillenträgers beschrieben, bei dem die Punktemenge der auf dem Rand der Brillengläser liegenden Bildpunkte als eine Überlagerung von auf der Definition von sogenannten Fourier-Deskriptoren basierenden mathematischen Funktionen modelliert wird.

Diese mathematischen Funktionen beschreiben unterschiedliche Brillenrand-Formen. Diese hier für das Modellieren des Randes von Brillengläsern verwendeten Funktionen werden stochastisch, d. h. nach einem Zufallsprinzip, aus einer endlichen Menge möglicher Funktionen ausgewählt. Das anhand der ausgewählten Funktionen beschriebene Modell für den Rand der Brillengläser wird dann mit einem in einem Kantendetektionsverfahren ermittelten Brillenglasrand verglichen und bewertet.

In C. Nieuwenhuis et al.,Spatially Varying Color Distributions for Interactive Multilabel Segmentation, IEEE Transactions on Pattern Analysis and Machine Intelligence, IEEE Computer Society, USA, Bd. 35, Nr. 5, S. 1234 - 1247 (2013) ist ein Verfahren für das Segmentieren unterschiedlicher Bereiche in digitalen Bildern beschrieben. Hier wird die Farbe von Bildpunkten in den digitalen Bildern bewertet. Dazu markiert eine Bedienperson an einem Computer unterschiedliche Bildbereiche, die segmentiert werden sollen, manuell z. B. mit einer Computermaus. Die unterschiedlichen Bildbereiche werden dann durch Optimieren einer auf bedingten Wahrscheinlichkeiten beruhenden Kostenfunktion segmentiert. Hierfür wird für einen jeden Bildpunkt der Bilder anhand der Farbinformation zu den manuell markierten Bildbereichen die bedingte Wahrscheinlichkeit maximiert, dass der Bildpunkt in einem bestimmten Bildbereich liegt. Gleichzeitig sollen die segmentierten Regionen möglichst kompakt sein.

In A. Fernandez et al., Glasses detection on real images based on robust a-lignment", Machine Vision and Applications, Springer Verlag, Bd. 26, Nr. 4, S. 519 - 531 (2015) ist ein Verfahren für das Bewerten von Personenaufnahmen offenbart, um hier zu erkennen, ob die Personen Brillenträger sind. Dieses Verfahren detektiert unveränderliche Gesichtsmerkmale und berechnet daraus die Region um die Augen. Innerhalb dieser Region wird aus den Farben ein Merkmalsvektor bestimmt, mittels dessen die Person als Brillenträger oder Nicht-Brillenträger klassifiziert wird.

Aus C. Wu et al., Automatic Eyeglasses removal from Face Images, IEEE Transactions on Pattern Analysis and Machine Intelligence, IEEE Computer Society, USA, Bd. 26, Nr. 3, S. 332 - 336 (2004) offenbart ein Verfahren, das zur Entfernung von Brillen und Brillengläsern aus digitalen Personenaufnahmen dient. Das Verfahren lernt aus einer Datenbank, in der Personen mit und ohne Brille gespeichert sind, wie die Augenregion verändert muss, um die Brille aus dem Gesicht zu entfernen. Außerdem kann die Kontur der Fassung detektiert werden, indem Punkte auf dem Fassungsrand sowie externe Parameter wie Rotation, Skalierung und Translation mittels eines stochastischen Verfahrens optimiert werden.

Die DE 10 2011 115 239 A1 beschreibt, in einem digitalen Bild eines Brillenträgers die Kontur des Randes der Brillengläser unter Rückgriff auf einen Brillenglas-spezifischen Tracerdatensatz zu ermitteln, der den Verlauf des Brillenglasrandes enthält.

Aufgabe der Erfindung ist es, eine genaue Repräsentation des Rands eines Brillenglases anzugeben, das in einer Brillenfassung aufgenommen werden soll, z. B. um diese Information bei der Bestimmung von Zentrierparametern, oder auch beim Zentrieren eines linken oder rechten Brillenglases in eine Brillenfassung oder beim Einschleifen eines linken oder rechten Brillenglases in eine Brillenfassung, insbesondere beim Herstellen eines Brillenglases oder beim Herstellen einer Brille zu berücksichtigen.

Zur Lösung dieser Aufgabe werden die in den unabhängigen Patentansprüchen angegebenen Merkmalskombinationen vorgeschlagen. Vorteilhafte Ausgestaltungen und Weiterbildungen der Erfindung ergeben sich aus den abhängigen Ansprüchen.

Unter einer Kostenfunktion $E(u)$, die in der Fachwelt auch als sogenannte Zielfunktion, Energiefunktion, Verlustfunktion (loss function), Nutzenfunktion (utility function) oder als Tauglichkeitsfunktion (fitness function) bezeichnet wird, versteht die Erfindung eine Abbildung, die eine jede Belegung ihrer Argumente $u$ auf einen skalaren Wert $E(u)$ abbildet, der die Bedeutung von Kosten oder einer skalaren physikalischen Größe wie z. B. Energie oder Abstand hat.

Im Sinne der Erfindung ist unter dem Optimieren einer Kostenfunktion $E(u)$ die Auswahl eines besten Arguments $u$ der Kostenfunktion $E(u)$ zu verstehen, bei dem die Kostenfunktion $E(u)$ dem Zielkriterium genügt, dass sie einen zumindest lokal extremalen Wert annimmt, d. h. einen Wert, der zumindest lokal maximal oder minimal ist.

Unter aus Bilddaten $b(x)$ abgeleiteten Informationsdaten $I(x)$ versteht die Erfindung Daten zu Informationen, die aus den Bilddaten $b(x)$ berechnet werden können, etwa Farbmodelle, Kantenbilder, Farbwahrscheinlichkeitsverteilungen, Objekte in Bildern, wie etwa Augen, Spiegelungen, Symmetrieachsen und Sichtstrahlen. In die Berechnung von Informationsdaten $I(x)$ aus Bilddaten $b(x)$ können insbesondere Kalibrierungsinformationen zu einer Kamera eingehen, die für das Erfassen der Bilddaten $b(x)$ dient.

Unter einem deterministischen Optimierungsverfahren für das Optimieren einer Kostenfunktion versteht die Erfindung ein Optimierungsverfahren, das auch bei Wiederholung unter Verwendung des gleichen Startwerts immer auf dasselbe Argument der Kostenfunktion führt.

Eine Kostenfunktion ist deterministisch optimierbar, wenn ein deterministischer Algorithmus existiert, der ein globales oder lokales Optimum der Kostenfunktion berechnet, wobei das berechnete Argument der Kostenfunktion in dem globalen oder lokalen Optimum eine brauchbare Lösung des Optimierungsproblems bildet, d. h. eine Lösung, die an eine Lösung des Optimierungsproblems gestellten minimalen Güteanforderungen entspricht und damit als ein vernünftiges durch Optimieren der Kostenfunktion erhaltenes Ergebnis verwendet werden kann.

Ein deterministisches Optimierungsverfahren ist im Gegensatz zu einem stochastischen Optimierungsverfahren frei von Zufallseinflüssen und berechnet jedes Mal die gleiche Lösung bei gleichem Startwert. Ein deterministisches Optimierungsverfahren ergibt daher ausgehend vom gleichen Startwert bei Wiederholung immer das gleiche Ergebnis. Anders als ein stochastisches Optimierungsverfahren führt ein deterministisches Optimierungsverfahren somit direkter, zuverlässig und (abhängig von der Größe des Parameterraums) oft auch schneller auf eine Lösung. Sie sind effizient im Hinblick auf Laufzeit und/oder Speicherbedarf. Deterministische Optimierungsverfahren eignen sich oft für die Echtzeitimplementierung auf einer Grafikkarte.

Stochastische Optimierungsverfahren benötigen demgegenüber meist eine lange Rechenzeit und führen bei gleicher Eingabe und wiederholter Ausführung auf eine Verteilung von Lösungswerten, da Zufallseinflüsse eine Rolle spielen. Aus dieser Verteilung muss schließlich ein Element als bestes ausgewählt werden, z. B. der Erwartungswert oder der Median der Verteilung. Oft erfüllen diese Art von Algorithmen nicht die Effizienzanforderungen des gestellten Problems im Hinblick auf Laufzeit und/oder Speicherbedarf.

Für einen Augenoptiker ist es von Bedeutung, bei dem Bestimmen von Zentrierparametern einen möglichst schnellen und fehlerfreien Arbeitsfluss zu haben, um eine hohe Qualität der Beratung zu erzielen, die den Endkunden im Fokus hat und nicht von technischen Prozessen dominiert ist. In diesem Zusammenhang ist eine möglichst störungsfreie Funktionsweise (Robustheit) der automatischen Verfahren notwendig. Dies kann mit Methoden der digitalen Bildanalyse und des maschinellen Lernens erreicht werden.

Die Erfinder haben erkannt, dass mit Methoden der digitalen Bildanalyse erreicht werden kann, den Rand von an eine vorgegebene Brillenfassung angepassten Brillengläsern nicht nur mit hoher Genauigkeit zu ermitteln, sondern auch mit großer Zuverlässigkeit auf eine gegenüber Fehlereinflüssen sehr robuste Art und Weise.

In der Kostenfunktion E(u) kann mindestens ein aus Daten maschinell gelerntes Modell enthalten sein. Insbesondere kann der Verlauf eines Rands des Brillenglases oder des linken Brillenglases und des rechten Brillenglases durch deterministisches Optimieren der Kostenfunktion festgelegt werden.

Erfindungsgemäß kann die Kostenfunktion E(u) eine Summe gewichteter Energieterme sein. Indem die Kostenfunktion E(u) unter der Zwangsbedingung optimiert wird, dass Abweichungen von einem Farbmodell oder einem Brillenglasmodell bestraft und Spiegelungen an einem Brillenglas oder einer Brillenfassung berücksichtigt werden, kann eine hohe Genauigkeit für eine Repräsentation des Rands eines an eine Brillenfassung angepassten Brillenglases erzielt werden. Zwangsbedingungen bei dem Optimieren der Kostenfunktion können auch an eine Repräsentation des Rands eines Brillenglases gestellte 2D- oder 3D-Symmetriebedingungen sein. Von Vorteil ist es, wenn das Optimieren der Kostenfunktion E(u) nur innerhalb eines Interessengebiets (Region of Interest) erfolgt, das durch die detektierten Gesichtsmerkmale festgelegt ist.

Zu bemerken ist, dass die Kostenfunktion E(u) im Rahmen der Erfindung auf mehrere Arten minimiert werden kann, z. B. über kontinuierliche Methoden, primal-dual-Ansätze, graphen-theoretische Methoden, diskrete Graph-Cut Methoden, Active Contour Modelle, Gradientenabstiegsverfahren, Simplexverfahren, oder ähnliches. Kontinuierliche Methoden sind dadurch definiert, dass sie das Bild als kontinuierliche Funktion beschreiben und dadurch die Kostenfunktion auf einem kontinuierlichen mathematischen Raum definiert ist. Die Diskretisierung der Kostenfunktion auf Basis von Bildpunkten in Bilddaten u(x) (Pixelbasis) erfolgt bevorzugt erst in einem letzten Schritt vor der Optimierung. Im Gegensatz dazu definieren sogenannte diskrete Optimierungsmethoden die Optimierungsfunktion direkt auf der Ebene von Bildpunkten (Pixelebene) in Form eines Graphen. Kontinuierliche Methoden haben gegenüber diskreten Methoden den Vorteil, dass sie Artefakte an Kanten vermeiden und sehr viel leichter parallelisierbar sind, was schnelle Berechnungen auf einer Graphikkarte ermöglicht.

Die aus den Bilddaten b(x) abgeleiteten berechneten Informationsdaten I(x) umfassen ein aus den erfassten Bilddaten b(x) mittels eines Kantendetektionsalgorithmus ermitteltes Kanteninformationsbild. Auf diese Weise lassen sich in einem Bild des Gesichts eines Brillenträgers Brillenfassungen erkennen. Der Kantendetektionsalgorithmus ist einen Kantendetektor. Ein solcher Kantendetektor ermöglicht es, in den Bilddaten b(x) Bildpunkte zu detektieren, die lichtempfindlichen Pixeln in der Bildebene des Bildsensors einer Bilderfassungseinrichtung entsprechen und die auf Kanten der Brillenfassung liegen. Dabei wird für jeden Bildpunkt eine die Wahrscheinlichkeit für eine Kante repräsentierender Wert angegeben, mit der er zur Brillenkante gehört. Der Kantendetektor ist ein speziell auf Brillenkanten mittels Machine Learning Verfahren trainierter Kantendetektor, der zwischen Brillenfassungskanten und Nicht-Brillenfassungskanten oder zwischen einer äußeren Brillenfassungskante und der inneren Brillenfassungskante unterscheiden kann.

Es ist möglich, dass der Kantendetektionsalgorithmus für die Kantendetektion auf eine Filterbank mit einer Menge von Filtern zugreift.

Die Erfinder haben herausgefunden, dass mit Hilfe sogenannten maschinellen Lernens erreicht werden kann, dass das Ermitteln des Rands eines Brillenglases, das an eine Brillenfassung angepasst ist, nicht nur mit hoher Genauigkeit sondern auch mit großer Zuverlässigkeit in einer Weise gewährleistet werden kann, die gegenüber Fehlereinflüssen sehr robust ist.

Eine Idee der Erfindung ist es, dass die aus den Bilddaten b(x) abgeleiteten berechneten Informationsdaten I(x) ein aus den erfassten Bilddaten b(x) mittels eines die Farbe von Bilddaten b(x) auswertenden Farbauswertungsalgorithmus ermitteltes Farbinformationsbild umfassen. Anhand der Informationsdaten I(x) können Farbinformationsdaten f(x) und Kanteninformationsdaten g(x) berechnet werden. Die Kostenfunktion E(u) kann insbesondere eine gewichtete Summe eines Kantendetektionskostenterms $E_{edge}$(u) und eines Farbauswertungskostenterms $E_{color}$(u) sein.

Ein solcher Farbauswertungsalgorithmus dient dazu, Bildpunkte, die auf einem Brillenglas liegenden Punkten entsprechen, von Bildpunkten zu unterscheiden, die auf der Brillenfassung liegenden Punkten oder in dem Hintergrund der Brillenfassung liegenden Punkten entsprechen. Der Farbauswertungsalgorithmus kann hierzu ein Farbmodell benutzen, z. B. ein Hautfarbmodell, das Bildpunkte, die Punkten in dem Gesicht des Brillenträgers entsprechen, von Bildpunkten trennt, die auf der Brillenfassung liegenden Punkten entsprechen. Von Vorteil ist es auch, in dem Algorithmus das Bild mit einem Tiefpassfilter stark zu glätten, um auf diese Weise eine Annäherung an das Gesicht des Brillenträgers ohne Brillenfassung zu erhalten. Diese Näherung kann dann ein Farbmodell für innerhalb des Brillenglases liegende Bildpunkte bilden. Um eine Annäherung an das Gesicht des Brillenträgers ohne Brillenfassung zu erhalten ist es auch möglich, dass der Algorithmus eine Routine für maschinelles Lernen auf der Basis von Beispieldaten zu Personen ohne eine Brillenfassung enthält oder eine Routine, die aus den Bilddaten b(x) zu dem Brillenträger mit der Brillenfassung mittels sogenannter Principal Component Analysis gelernt gelernt auf Basis einer Vielzahl von Bildern mit Gesichtern ohne Brille einen Datensatz generiert, der einem Bild des Gesichts des Brillenträgers bzw. einem Bild eines Ausschnitts des Gesichts des Brillenträgers ohne die Brillenfassung entspricht.

Im Rahmen des Farbauswertungsalgorithmus kann auch ein Wechsel des Farbraums von dem RGB-Farbraum in einen Farbraum vorgesehen sein, der Helligkeit und Farbe trennt, z. B. ein Wechsel in den YCbCr-Raum oder den HSV-Farbraum. Diese Maßnahme ermöglicht es, vergleichsweise beleuchtungsunabhängig zu arbeiten. Es sei bemerkt, dass im Rahmen der Erfindung ein Farbraum auch aus einer Vielzahl von mehreren Bildern entsprechenden Bilddaten b(x) gelernt werden kann. Außerdem sei bemerkt, dass im Rahmen der Erfindung vorgesehen sein kann, anhand von bekannten Hautfarbpunkten in Bilddaten b(x), z. B. anhand von Bildpunkten, die Punkten auf einem Nasenrücken entsprechen, einen passenden Hautfarbraum zu definieren. Günstiger Weise ist bei dem Farbauswertungsalgorithmus mit einem solchen Farbmodell dann vorgesehen, die Information des Abstands von Bildpunkten in den erfassten Bilddaten von den Augen des Brillenträgers auszuwerten, um zu berücksichtigen, dass Bildpunkte, die nahe an den Augen des Brillenträgers liegen, mit einer höheren Wahrscheinlichkeit in dem Bereich von in der Brillenfassung aufgenommenen Brillengläsern liegen als Bildpunkte in den Bilddaten b(x), die von den Augen des Brillenträgers einen großen Abstand haben. In dem Farbauswertungsalgorithmus kann hierfür z. B. eine Distanzfunktionsroutine vorgesehen sein, die für einen jeden Bildpunkt, d. h. ein jedes Pixel eines Bildsensors einer Bilderfassungseinrichtung den kürzesten Abstand zu einem Bildpunkt, d. h. einem Pixel des entsprechenden Bildsensors berechnet, der auf den Augen des Brillenträgers liegt. Je größer dieser ermittelte kürzeste Abstand ist, desto höhere Kosten werden dann in dem Farbterm der Kostenfunktion zum Ansatz gebracht, da eine Zugehörigkeit des Pixels zur Glasregion bzw. zum Glasrand unwahrscheinlicher wird.

Eine bevorzugte Ausführungsform der Erfindung sieht vor, dass als Kostenfunktion E(u) für das Auffinden der gesuchten Brillenglasdaten u(x) eine konvexe Funktion ausgewählt wird.

Unter einer konvexen Funktion wird vorliegend wie in der Analysis eine reellwertige Funktion verstanden, deren Graph unterhalb jeder Verbindungsstrecke zweier seiner Punkte liegt. Dies ist gleichbedeutend dazu, dass der Epigraph der Funktion, also die Menge der Punkte oberhalb des Graphen, eine sogenannte konvexe Menge bildet.

Die Konvexität der Kostenfunktion E(u) erreicht die Erfindung insbesondere dadurch, dass diese eine Summe von konvexen Kostenfunktionstermen ist. Z. B. kann die Kostenfunktion aus einem konvexen Farbkostenterm $E_{color}(u(x))$, der die Farbe der Bilddaten b(x) mit Brillenglasdaten u(x) korreliert und mittels eines Farbmodells bewertet und einem konvexen Kantenkostenterm $E_{edge}(u(x))$ gebildet sein, der eine Korrelation von Bildkanten in den Bilddaten b(x) mit den Brillenglasdaten u(x) oder mit den durch eine Ableitung von Brillenglasdaten b(x) repräsentierten Rand 26 eines Brillenglases 28 oder zweier Brillengläser 28, 29 ist.

Die Konvexität der Kostenfunktion bringt drei große Vorteile mit sich: Im Allgemeinen haben Funktionen globale und lokale Optima. Deshalb garantieren Optimierungsverfahren normalerweise nur das Finden eines lokalen Optimums, nicht des globalen Optimums. Bei konvexen Funktionen wird dagegen immer das globale Optimum gefunden, da keine lokalen Optima existieren. Bei konvexen Kostenfunktionen kann ein beliebiger Startwert (z. B. u(x) = 0 = kein Brillenglas vorhanden) verwendet werden, da das Verfahren immer zu einem globalen Optimum konvergiert. Eine konvexe Kostenfunktion ist deshalb deterministisch optimierbar. Insbesondere ist eine konvexe Kostenfunktion mittels einfacher deterministischer Algorithmen wie z. B. Gradientenabstiegsalgorithmen global optimierbar. Demgegenüber bedarf es bei nicht-konvexen Funktionen eines guten Startwerts, der nahe an einem globalen Optimum liegt, um brauchbare, gute Lösungen des Optimierungsproblems als Ergebnisse eines determinstischen Algorithmus zu erhalten.

Von Vorteil ist es, wenn das Berechnen von aus den Bilddaten abgeleiteten Informationsdaten I(x) das Ermitteln von Spiegelungsinformationsdaten s(x) mit einem Algorithmus für das Erkennen von Spiegelungen an der Brillenfassung und/oder eines in der Brillenfassung aufgenommenen Brillenglases umfasst. Dabei ist es von Vorteil, wenn dieser Algorithmus so ausgelegt ist, dass Spiegelungen auf einem Brillenglas von Spiegelungen auf der Brillenfassung unterschieden werden können. Dies kann z. B. durch Detektion besonders heller Bereiche im Bild mit anschließender Analyse der Form der detektierten Spiegelungsregionen geschehen. Auf diese Weise kann ebenfalls die Genauigkeit der ermittelten Repräsentation des Rands eines Brillenglases gesteigert werden. Von Vorteil für die Genauigkeit des Verfahrens ist es auch, wenn der Farbauswertungsalgorithmus und der Kantendetektor die aus den Bilddaten b(x) berechneten Spiegelungsinformationsdaten s(x) berücksichtigt, da Spiegelungen in einem Bild starke, störende Kanten haben, die leicht mit dem Glasrand verwechselt werden können.

Das Berechnen von aus den Bilddaten b(x) abgeleiteten Informationsdaten I(x) kann das Ermitteln von Gesichtsmerkmalsinformationsdaten m(x) mit einem Algorithmus für das Erkennen von Gesichtsmerkmalen umfassen.

Eine Idee der Erfindung ist es auch, dass der Algorithmus für das Erkennen eines oder mehrerer Gesichtsmerkmale aus der Gruppe Auge, Pupille, Augenbraue, Nase, Mund oder Gesichtskontur ausgelegt ist. Insbesondere ist es möglich, dass der Farbauswertungsalgorithmus und/oder der Kantendetektionsalgorithmus die aus den Bilddaten b(x) berechneten Gesichtsmerkmalsinformationsdaten m(x) berücksichtigt. Weil auch die Augen und Augenbrauen eines Brillenträgers in den auf erfassten Bilddaten b(x) beruhenden Bildern Kanten hervorrufen können, die das Ermitteln des Rands von Brillengläsern stören, ist es von Vorteil, wenn auch der Kantendetektionsalgorithmus von den Augen oder Augenbrauen des Brillenträgers hervorgerufene Kanten in auf erfassten Bilddaten b(x) beruhenden Bildern berücksichtigt, indem aus den Bilddaten b(x) berechneten Gesichtsmerkmalsinformationsdaten m(x) ausgewertet werden.

Um das Gesicht und die sogenannte Region of Interest, in der sich die Brillenfassung, d. h. die Brille im Bild befindet, zu bestimmen, kann die Detektion von Gesichtsmerkmalen hilfreich sein. Gesichtsmerkmale sind in diesem Fall z. B. eine oder mehrere Merkmale aus der Gruppe Augen, Position der Pupillen, Augenbrauen, Nase, Mund und/oder Gesichtskontur eines Gesichts. Basierend auf einem oder mehreren Merkmalen kann man berechnen, in welchem Bereich die Brillenkanten gesucht werden. Außerdem sind mit den Augen Punkte bekannt, die auf jeden Fall innerhalb des Glases liegen.

Für das Berechnen von aus den Bilddaten b(x) abgeleiteten Informationsdaten I(x) kann das Ermitteln von Brillenglasforminformationsdaten di(x) mit einem Algorithmus vorgesehen sein, der anhand eines dem Algorithmus zugeführten Brillenglasmodells oder anhand einer Vielzahl von dem Algorithmus zugeführten Brillenglasformen als Brillenglasforminformationsdaten di(x) ein parametrisches Modell oder eine Wahrscheinlichkeiten repräsentierende Karte über die Wahrscheinlichkeit angibt, dass erfasste Bilddaten auf einem Brillenglas liegen. Insbesondere kann vorgesehen sein, dass das Berechnen von aus den Bilddaten abgeleiteten Informationsdaten I(x) das Ermitteln von Brillenglasforminformationsdaten di(x) mit einem Algorithmus umfasst, der anhand eines dem Algorithmus zugeführten Brillenglasmodells oder anhand einer Vielzahl von dem Algorithmus zugeführten Brillenglasformen als Brillenglasforminformationsdaten di(x) eine 2D-Form oder eine 3D-Form eines in der Brillenfassung aufnehmbaren Brillenglases angibt.

Eine Idee der Erfindung ist es z. B., mittels von Hand vorsegmentierten Beispielen für Brillengläser ein Modell für die Form eines Brillenglases zu bestimmen. Ein solches Modell kann eine Wahrscheinlichkeitskarte sein, die für jeden Bildpunkt in erfassten Bilddaten b(x) angibt, wie wahrscheinlich es ist, dass der diesem Bildpunkt entsprechende Punkt innerhalb des Brillenglases liegt. Dabei ist es vorteilhaft, die segmentierten Beispiele anhand der Augenposition zu zentrieren und entlang der Hauptachsen oder anderer Achsen auszurichten. Es ist allerdings auch möglich, die Form von Brillengläsern in parametrischen Modellen zu schätzen, z. B. aus dem Brillenglas als Fläche in der Bildansicht oder aus den einer Brillenglaskontur entsprechenden Punkten. Die Parameter dieser Modelle können dann optimiert werden. Darüber hinaus ist zu bemerken, dass ein Modell auch als eine Nebenbedingung in der Optimierung verwendet werden kann, z. B. als Nebenbedingung, dass die finale Kontur innerhalb des zuvor gelernten Modellraumes liegt oder indem die Abweichung der Kontur vom nächstliegenden Element innerhalb des Merkmalsraums bestraft wird mittels zusätzlicher Kosten in der Kostenfunktion. Es versteht sich, dass anstatt Modelle aus Beispielen zu lernen im Rahmen der Erfindung auch entsprechende Modelle definiert werden können, z. B. Modelle, die auf sogenannten Tracerdaten z. B. in Form von 3D-Koordinaten oder in Form von 2D-Koordinaten basieren, die mittels eines den Verlauf von Fassungsinnenrändern in einer Brillenfassung abtastenden Tracer-Geräts bereitgestellt werden.

Von Vorteil ist es, wenn der Farbauswertungsalgorithmus die aus den Bilddaten b(x) berechneten Brillenglasforminformationsdaten di(x) berücksichtigt. Die aus den Bilddaten b(x) abgeleiteten berechneten Informationsdaten I(x) können auch eine mittels eines Brückenmittendetektionsalgorithmus ermittelte Brückenmitte M umfassen. Darüber hinaus ist es möglich, dass den bereitgestellten Bilddaten b(x) zu dem Brillenträger aus wenigstens zwei unterschiedlichen Blickwinkeln aufgenommene Bilder mit oder ohne zugehörige Kalibrierinformationen zugrunde liegen.

Die aus den Bilddaten b(x) abgeleiteten berechneten Informationsdaten I(x) können weiter ein mittels eines Triangulationsalgorithmus aus den Bilddaten b(x) oder aus den segmentierten Brillenglasdaten u(x) ermittelte Tiefenkartendaten t(x) umfassen. Dabei ist es von Vorteil, wenn die Kostenfunktion E(u) in einem Kostenfunktionsterm als eine Zwangsbedingung berücksichtigt, dass ein in einer Brillenfassung aufgenommenes linkes und ein rechtes Brillenglas zueinander symmetrisch sind. Dies kann z. B. dadurch geschehen, dass die Kostenfunktion mit einer Stereobedingung aufeinander abgebildete Punkte in Brillenglasdaten u(x) zu Bildern bewertet, die unterschiedlichen Aufnahmerichtungen der Bilderfassungseinrichtungen entsprechen, z. B. indem ein 3D-Punkt in dem Gesicht des Brillenträgers, d. h. ein Punkt mit Tiefeninformation in mehrere Bilder abgebildet wird, so dass entsprechende Punkte in auf den Bilddaten b(x) basierenden Bildern in einem jedem Bild entweder einem Brillenglas (u(x) = 1) oder einem hinter einem Brillenglas liegenden Hintergrund (u(x) = 0) bzw. in jedem Bild dem Brillenrand zugeordnet werden.

Zu bemerken ist, dass die Kostenfunktion für das Auffinden der gesuchten Brillenglasdaten u(x) auch einen Symmetriekostenterm $E_{sym}(u(x))$ enthalten kann, der in den Bilddaten b(x) enthaltene Symmetrien mit Brillenglasdaten u(x) korreliert.

Eine Idee der Erfindung ist es, hierfür die Information der Brückenmitte M einer Brillenfassung heranzuziehen, um eine 3D-Spiegelebene für die Brillengläser zu definieren. Bei Frontalaufnahmen ermöglicht die Brückenmitte M auch, die Brillenglasdaten u(x) für ein linkes und ein rechtes Brillenglas aufeinander anzupassen und für die Anpassung eine Symmetrie-Zwangsbedingung (Symmetrie-Constraint) zu formulieren. Die Brückenmitte M kann auch geschätzt werden, indem die Mitte des linken und rechten inneren Glasrandes von Brillengläsern berechnet wird.

Initial kann die Brückenmitte M z. B. mit Hilfe der Mittelpunkte zwischen den detektierten Pupillenmitten, der Position des Nasenrückens oder einer gewichteten Kombination beider Merkmale bestimmt werden.

Ist nur eine Frontalaufnahme vorhanden ohne weitere Aufnahmen oder zusätzliche 3D-Informationen, so kann trotzdem ein Symmetrie-Constraint in der 2D-Ebene formuliert werden. Dafür kann eine Spiegelachse geschätzt werden, z. B. als Brückenmitte, als Mittelsenkrechte zwischen den beiden Augen des Brillenträgers oder als Mittellinie zwischen den inneren Kanten der beiden die Glasränder umschreibenden Rechtecke bzw. Parallelogramme einer Initial- oder Zwischenlösung. Diese Mittellinie kann auch während der Optimierung angepasst werden. Mittels eines Matching-Verfahrens kann dann die bestmögliche Abbildung des gespiegelten rechten bzw. linken Brillenglases auf das jeweils andere berechnet werden. Aus der Abweichung der aufeinander abgebildeten Glasflächen oder der Glaskonturen kann dann ein Strafterm berechnet werden. Ein Strafterm ist ein Term, der zusätzliche Kosten in der Kostenfunktion induziert, in diesem Fall für nicht-symmetrische Lösungen.

Falls der Proband nicht ganz mittig vor der Kamera steht, kann es bei der Frontalaufnahme zu perspektivischen Verzerrungen im Bild und damit zu nicht symmetrischen Darstellungen der beiden Gläser im Bild kommen. Die Symmetriebedingung kann aber trotzdem als Approximation verwendet werden, in diesem Fall vorzugsweise mit geringerem Gewichtungsfaktor.

Alternativ kann auch, falls nur eine Frontalaufnahme vorhanden ist, eine bestimmte Tiefe und/oder Form und/oder Krümmung der Gläser im Raum angenommen werden, um auf diesem Weg 3D-Informationen für eine Symmetriebedingung zu erhalten.

Indem Bilddaten b(x) mit Bilderfassungseinrichtungen erfasst werden, die das Gesicht des Brillenträgers mit einer von diesem getragenen Brillenfassung aus verschiedenen Blickwinkeln aufnehmen und indem zu diesen Bilderfassungseinrichtungen Kalibrier-Informationen bekannt sind, ist es möglich durch Triangulation zu dem Gesicht des Probanden mit der Brillenfassung die vorstehend erwähnte Tiefenkarte t(x) in Form einer Punktewolke zu berechnen. Aus dieser Punktewolke lässt sich dann die Form von 3D-Brillengläsern z. B. als Ebenen in einer Approximation an die wahre Kontur der Brillengläser schätzen. Aus diesen Ebenen kann dann mittels einer Spiegelebenen-Zwangsbedingung (bzw. eines Strafterms), die an die Kostenfunktion gestellt wird, eine Symmetrie der Brillenfassung in drei Dimensionen sichergestellt werden. Im Rahmen der Erfindung können diese 3D-Informationen dann auch dazu verwendet werden, Zentrierparameter zu berechnen.

Ein erfindungsgemäßer Algorithmus für das Berechnen des Rands von Brillenglasern, d. h. die Brillenkontur durch Minimierung einer Kostenfunktion mittels einer Optimierungsroutine enthält eine Kantendetektionsroutine. Der Algorithmus kann auch eine oder mehrere Routinen aus der Gruppe Farbauswertungsroutine, Spiegelungsroutine, Brillenglas-Lageroutine, Triangulationsroutine, Brückenmitten-Erkennungsroutine, Gesichtsmerkmai-Erkennungsroutine, Routine für das Schätzen des 3D-Verlaufs von Brillenglasern enthalten.

Zu bemerken ist, dass in der die Informationsdaten I(x) mit Brillenglasdaten u(x) verknüpfenden Kostenfunktion E(u) mindestens ein aus Daten maschinell gelerntes Modell enthalten sein kann.

Unter einem aus Daten maschinell gelernten Modell ist dabei eine Abbildung zu verstehen, deren Parameter mittels eines Machine Learning Algorithmus auf Basis einer Menge von Beispieldaten automatisch so gelernt bzw. angepasst wurden, dass die Abbildung möglichst gut die Beispieldaten (Trainingsdaten) beschreibt und auch auf neue Beispiele (Validierungsdaten) generalisiert.

Die Erfindung erstreckt sich auch auf ein Computerprogramm mit Programmcode, welcher, wenn in einem Computersystem geladen und ausgeführt, zur Durchführung eines Verfahrens nach einem der vorangegangenen Ansprüche ausgelegt ist.

Eine erfindungsgemäße Vorrichtung zum Ermitteln des Verlaufs des Rands eines Brillenglases für einen Brillenträger enthält wenigstens eine Bilderfassungseinrichtung zum Bereitstellen von Bilddaten b(x) zu dem Brillenträger mit einer getragenen Brillenfassung und hat Mittel zum Berechnen von aus den Bilddaten b(x) abgeleiteten Informationsdaten I(x), Mittel zum Berechnen einer die Informationsdaten I(x) mit Brillenglasdaten u(x) verknüpfenden Kostenfunktion E(u), wobei die Brillenglasdaten u(x) die räumliche Ausdehnung wenigstens eines in der Brillenfassung gehaltenen Brillenglases beschreiben, und Mittel zum Festlegen eines Verlaufs eines Rands des Brillenglases durch Optimieren der Kostenfunktion E(u).

Die Erfindung erstreckt sich außerdem auf ein Verfahren zum Zentrieren eines linken Brillenglases und/oder eines rechten Brillenglases in eine Brillenfassung.

Um die Brillengläser korrekt in eine Brillenfassung einzupassen, ist es erforderlich, die Brillengläser zu zentrieren, d.h. es müssen die optischen Zentren der Gläser mit den visuellen Achsen der Augen des Brillenträgers in Deckung gebracht werden, damit die Brillengläser für das Sehen des Brillenträgers bestmögliches Sehen vermitteln.

Für das Zentrieren der Brillengläser ist es erforderlich, Zentrierparameter zu kennen, z.B. die Information über den Pupillenabstand und die Information über die Höhe der Pupillen in Bezug auf die Brillenfassung. Darüber hinaus ist es für das Zentrieren von Brillengläsern wichtig, dass die Höhe der optischen Zentren der Brillengläser im Verhältnis in Bezug auf den unteren oder oberen Rand der Brillenfassung bekannt ist, in das die Brillengläser eingesetzt werden.

In dem erfindungsgemäßen Verfahren zum Zentrieren eines linken Brillenglases und/oder eines rechten Brillenglases in eine Brillenfassung werden in einem Schritt (i) zu dem Brillenglas Zentrierparameter bestimmt, wobei das Bestimmen der Zentrierparameter das vorstehend angegebene Ermitteln der Repräsentation des Rands des Brillenglases umfasst, und es werden in einem weiteren Schritt (ii) das Brillenglas mit den in dem vorausgehenden Schritt (i) bestimmten Zentrierparametern in die Brillenfassung zentriert.

Darüber hinaus erstreckt sich die Erfindung auf ein Verfahren zum Einschleifen eines linken Brillenglases oder einer rechten Brillenglases in eine Brillenfassung, bei dem in einem Schritt (i) Zentrierparameter bestimmt werden, wobei das Bestimmen der Zentrierparameter das Ermitteln der Repräsentation des Rands des Brillenglases mit einem vorstehend angegebenen Verfahren umfasst, und bei dem in einem weiteren Schritt (ii) das Brillenglas basierend auf den in dem vorausgehenden Schritt (i) bestimmten Zentrierparametern für eine Anordnung in der Brillenfassung eingeschliffen werden.

Außerdem erstreckt sich die Erfindung auch auf ein Verfahren zum Herstellen eines linken Brillenglases oder eines rechten Brillenglases, bei dem von einem Verfahrensschritt des Einschleifens des Brillenglases in eine Brillenfassung nach einem vorstehend angegebenen Verfahren Gebrauch gemacht wird.

Die Erfindung erstreckt sich auch auf ein Verfahren zum Herstellen einer Brille, bei dem von einem oder mehreren der vorstehend angegebenen Verfahren Gebrauch gemacht wird.

Im Folgenden wird die Erfindung anhand eines in der Zeichnung in schematischer Weise dargestellten Ausführungsbeispiels näher erläutert.

Es zeigen:

Fig. 1     eine Vorrichtung zum Ermitteln einer Repräsentation des Rands der beiden Brillengläser in einer Brillenfassung;

Fig. 2     eine Repräsentation des Rands eines linken und eines rechten auf die Brillenfassung abgestimmten Brillenglases;

Fig. 3a    bis

Fig. 3f    verschiedene Zentrierparameter für ein Brillenglas;

Fig. 4     einen Algorithmus eines Computerprogramms zum Ermitteln einer Repräsentation des Rands der in eine Brillenfassung eingepassten Brillengläser;

Fig. 5     Bilddaten zu einem Brillenträger mit einer Brillenfassung;

Fig. 6     Gesichtsmerkmale eines Brillenträgers mit einer Brillenfassung;

Fig. 7     ausgewählte Bilddaten zu einem Brillenträger mit einer Brillenfassung;

Fig. 8     ein Kanteninformationsbild;

Fig. 9     ein Farbinformationsbild;

Fig. 10    ein Informationsbild zu ersten Spiegelungen;

Fig. 11    ein Informationsbild zu zweiten Spiegelungen;

Fig. 12    eine Glasmodell-Wahrscheinlichkeitskarte;

Fig. 13    Bilddaten mit einer Brückenmitte;

Fig. 14    Tiefenkarteninformationsdaten;

Fig. 15    eine erste Repräsentation von Brillenglasdaten;

Fig. 16    Werte einer Kostenfunktion für unterschiedliche Brillenglasdaten; und

Fig. 17    bis

Fig. 22    weitere Repräsentationen von Brillenglasdaten.

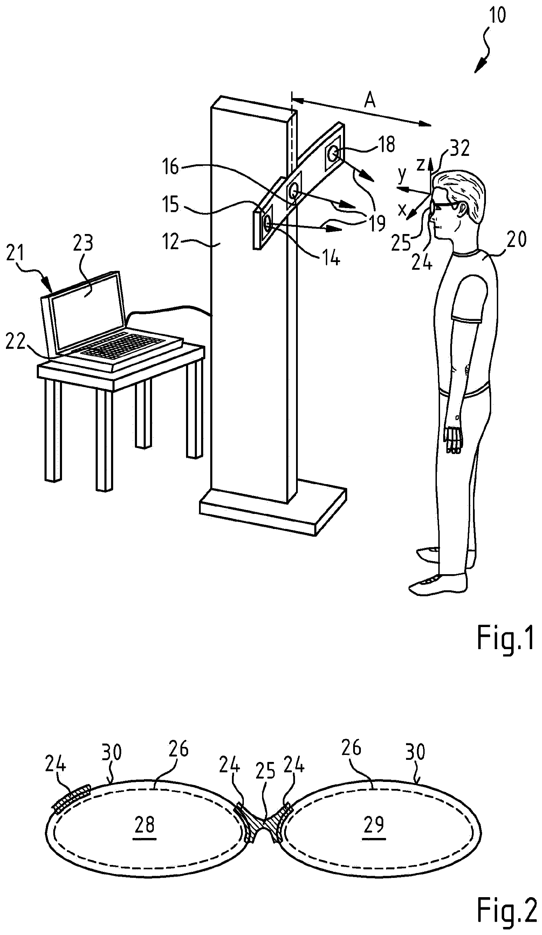

Die in der Fig. 1 gezeigte Vorrichtung 10 ist ein kamerabasiertes Zentriersystem und ermöglicht das Ermitteln einer Repräsentation des Rands der beiden Brillengläser in einer Brillenfassung. Die Vorrichtung 10 hat eine Säule 12, die relativ zueinander referenzierte Bilderfassungseinrichtungen 14, 16, 18 mit Bildsensoren 15 für das Erfassen von Bilddaten eines Brillenträgers 20 trägt. Sie enthält eine mit den Bilderfassungseinrichtungen 14, 16, 18 verbundene Rechnereinheit 21 mit einer Tastatur als Eingabeschnittstelle 22 und einer Ausgabeschnittstelle 23 in Form eines Monitors.

Für das Erfassen von Bilddaten mittels der Bilderfassungseinrichtungen 14, 16, 18 positioniert sich der Brillenträger 20 z. B. in einem Optikfachgeschäft mit einer ausgewählten Brillenfassung 24 in einem Aufnahmeabstand A ≈ 30 cm von der Säule 12. Mittels der Bilderfassungseinrichtungen 14, 16, 18 kann das Gesicht 25 des Brillenträgers 20 in unterschiedlichen Aufnahmerichtungen 19 erfasst werden.

Die Vorrichtung 10 ermöglicht das Ermitteln einer Repräsentation des Rands der Brillengläser, die in einer von dem Brillenträger 20 ausgewählten Brillenfassung 24 aufgenommen und gehalten werden sollen, um dessen Fehlsichtigkeiten zu korrigieren und nach Möglichkeit auszugleichen. Hierfür wird mittels der Bilderfassungseinrichtungen 14, 16, 18 ein Bilddatensatz b(x) aufgenommen, der das Gesicht 25 des Brillenträgers 20 mit der aufgesetzten Brillenfassung 24 zeigt. Um die gesuchte Repräsentation des Rands von auf die Brillenfassung 24 abgestimmten Brillengläsern zu ermitteln, kann der Bilddatensatz b(x) aufgenommen werden, ohne dass die von dem Brillenträger 20 getragene Brillenfassung 24 Brillengläser enthält. Es ist jedoch auch möglich, einen entsprechenden Bilddatensatz b(x) aufzunehmen, wenn der Brillenträger 20 eine Brillenfassung 24 trägt, in die Stützgläser oder Brillengläser montiert sind.

Die Fig. 2 zeigt ein linkes Brillenglas 28 und ein rechtes Brillenglas 29 mit dem Abschnitt einer Brillenfassung 24, die das Brillenglas 28 hält. Unter dem Rand 26 des Brillenglases 28 wird vorliegend der in der Norm DIN EN ISO 13666:2013-10 in Abschnitt 13.4 definierte Tragrand eines Brillenglases verstanden. Der Tragrand umgibt und begrenzt den Lentikularteil eines Brillenglases, d. h. denjenigen Teil, der entsprechend der Definition in Abschnitt 13.2 der Norm DIN EN ISO 13666:2013-10 die vorgeschriebene dioptrische Wirkung des Brillenglases 28, 29 hat. Der Tragrand eines Brillenglases kann bei randlosen Brillen mit der dem Brillenträger 20 abgewandten Kante der Seitenfläche 30 eines Brillenglases 28, 29, dem sogenannten Glasaußenrand zusammenfallen. Der Glasaußenrand ist in der von dem Brillenträger 20 getragenen Brillenfassung 24 teilweise verdeckt.

Als Repräsentation des Rands 26 eines auf die Brillenfassung 24 abgestimmten Brillenglases 28 ermittelt die Vorrichtung 10 als Datensatz eine in der Bildebene des Bildsensors 15 der Bilderfassungseinrichtung 16 liegende Punktemenge, welche die Projektion des Tragrands 26 des Brillenglases 28 in diese Bildebene beschreibt.

Die genaue Kenntnis des Verlaufs des Rands 26 eines auf eine Brillenfassung 24 abgestimmten Brillenglases 28 ermöglicht unter Berücksichtigung weiterer das Brillenglas 28 und die Augen beschreibender Größen ein präzises Bestimmen der sogenannten Zentrierparameter.

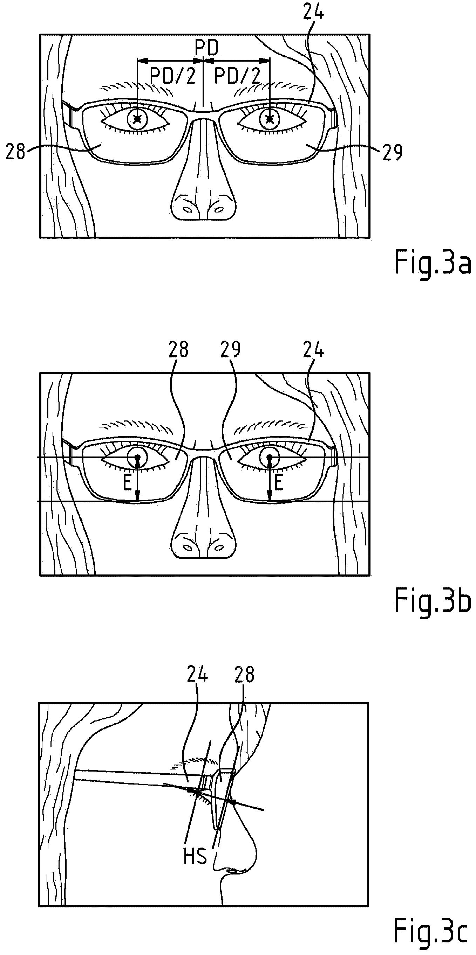

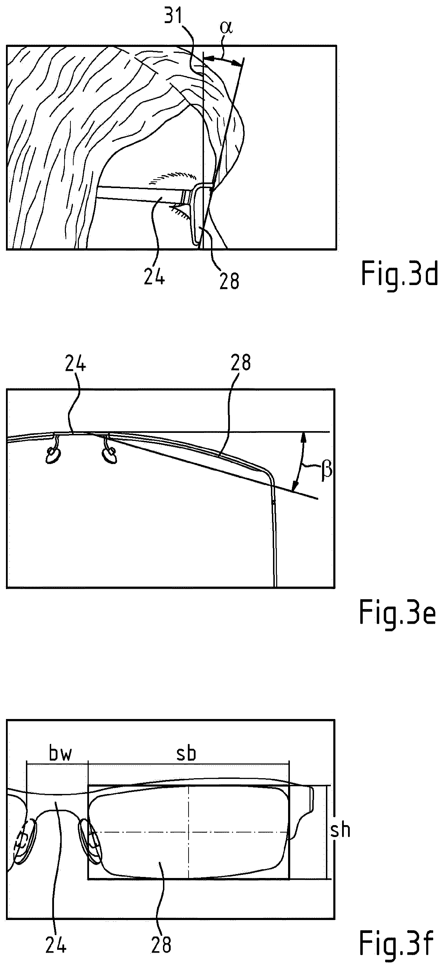

Die Fig. 3a zeigt den Zentrierparameter des Pupillenabstands PD für Brillengläser 28 in einer Brillenfassung 24, die ein Brillenträger 20 trägt. In der Fig. 3b ist als ein weiterer Zentrierparameter, die Einschleifhöhe E, zu sehen. Die Fig. 3c zeigt den Zentrierparameter des Hornhaut-Scheitelabstands HS. In der Fig. 3d ist als Zentrierparameter der auf die Vertikale 31 bezogene Vorneigungswinkel a zu sehen. Die Fig. 3e zeigt als Zentrierparameter den Fassungsscheibenwinkel β, d. h. den Winkel zwischen der Fassungsebene und der linken bzw. rechten Scheibenebene und die Fig. 3f die Boxmaß-Zentrierparameter, d. h. die Scheibenbreite sb, die Scheibenhöhe sh sowie den Abstand bw zwischen den Brillengläsern 28 in einer Brillenfassung 24.

Die Rechnereinheit 21 in der Vorrichtung 10 enthält ein Computerprogramm, das aus mittels der Bilderfassungseinrichtungen 14, 16, 18 bereitgestellten Bilddaten b(x) automatisch eine Repräsentation des Rands 26 der in die Brillenfassung 24 eingepassten Brillengläser 28 ermittelt. Dieses Computerprogramm ermöglicht es, dass Merkmale wie die Pupillenmitten und Fassungsrand anhand der bereitgestellten Bilddaten b(x) automatisch detektiert und deren Position in einem zu der Brillenfassung 24 referenzierten Koordinatensystem 32 subpixelgenau bestimmt werden kann. Das Computerprogramm ermittelt dabei durch Triangulation auch zu dem Koordinatensystem 32 der Brillenfassung 24 referenzierte Positionen der Bildebenen der Bildsensoren 15 der Bilderfassungseinrichtungen 14, 16, 18.

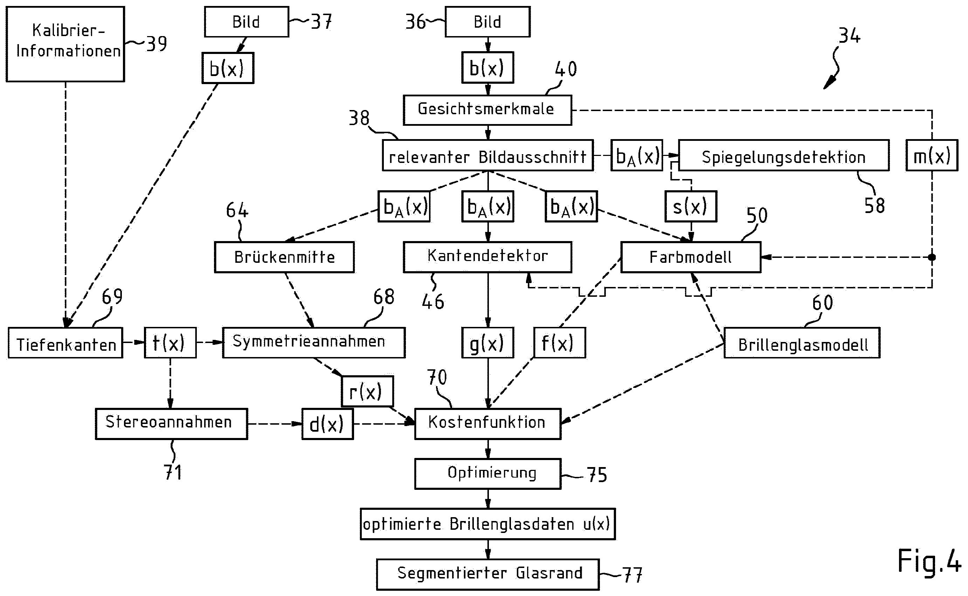

Anhand der Fig. 4 wird der in diesem für das Ermitteln der Repräsentation des Rands 26 eines Brillenglases 28 umgesetzte Algorithmus 34 nachfolgend beschrieben.

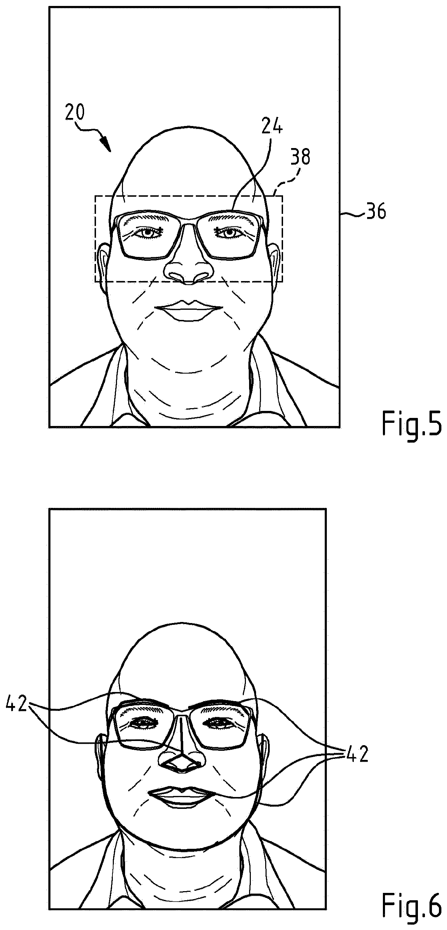

In einem ersten Schritt bestimmt der Algorithmus 34 aus von der Bilderfassungseinrichtung 16 bereitgestellten Bilddaten b(x) eines in der Fig. 5 gezeigten Bilds 36 des Brillenträgers 20 mit einer Brillenfassung 24, wie sie die Fig. 4 zeigt, einen relevanten Bildausschnitt 38.

Für das Bestimmen des relevanten Bildausschnitts 38 werden die Bilddaten b(x) in einer Gesichtsmerkmal-Erkennungsroutine 40 verarbeitet. Die Gesichtsmerkmal-Erkennungsroutine 40 ermittelt aus den Bilddaten b(x) die Lage der Nasenpartie, der Augen, der Kinnpartie und der Lippenpartie durch einen Vergleich mit Datenmustern 42, die in der Fig. 6 gezeigt und für entsprechende Aufnahmen des Gesichts eines Brillenträgers 20 mit einer aufgesetzten Brillenfassung 24 charakteristisch sind.

Basierend auf einem Gesichtsmerkmal oder mehreren Gesichtsmerkmalen des Brillenträgers 20 ist es möglich, zu berechnen, in welchem Bereich üblicherweise die Kanten der Brillenfassung 24 eines von einem Brillenträger 20 getragenen Brillengestells liegen. Zu bemerken ist, dass z. B. den Augen des Brillenträgers 20 entsprechende Bildpunkte auf einem Brillenglas 28 liegende Bildpunkte sind.

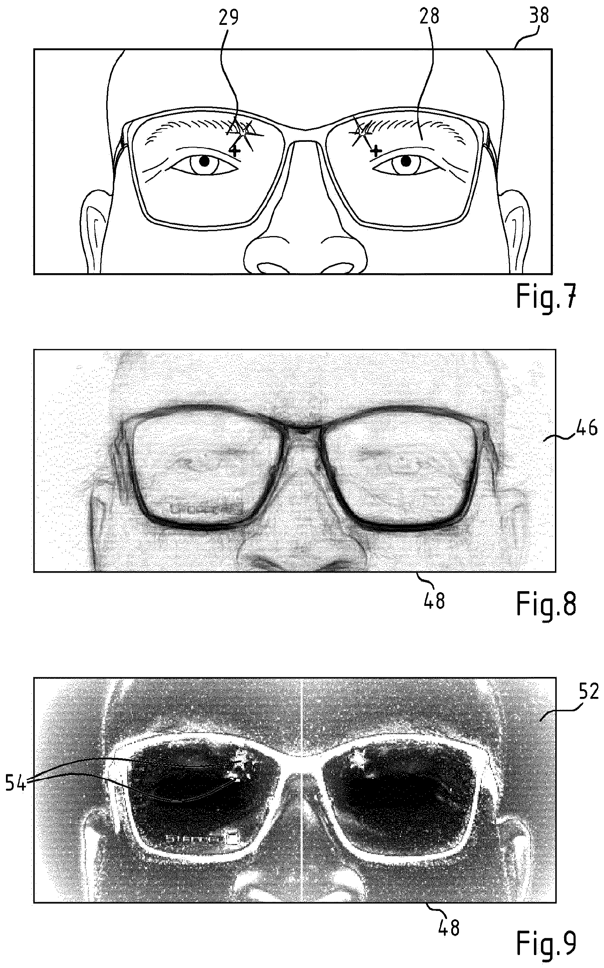

Die Fig. 7 zeigt mittels der Gesichtsmerkmal-Erkennungsroutine 40 aus den Bilddaten b(x) ermittelte Ausschnitts-Bilddaten $b_A(x)$ in dem gesuchten Bildausschnitt 38 mit der Brillenfassung 24. In dem Algorithmus 34 wird dann aus den Ausschnitts-Bilddaten $b_A(x)$ in einer Kantendetektionsroutine 44 mittels eines Kantendetektionsalgorithmus ein Kanteninformationsbild 46 mit Kanteninformationsdaten g(x) berechnet. Die Fig. 8 zeigt das Kanteninformationsbild 46 mit Kanteninformationsdaten g(x) als Bildpunkte in einem Graustufenbild 48.

In dem Algorithmus 34 wird außerdem aus den Bilddaten b(x) in einer Farbauswertungsroutine 50 mittels eines Farbauswertungsalgorithmus ein Farbinformationsbild 52 berechnet.

Der Farbauswertungsalgorithmus f(x) dient dazu, Bildpunkte in Bildbereichen, in denen ein Brillenglas 28 liegt, von Bildpunkten zu unterscheiden, die in den der Brillenfassung 24 entsprechenden Bildbereichen liegen. Der Farbauswertungsalgorithmus benutzt hierfür ein Farbmodell, z. B. ein Hautfarbmodell, mittels dessen Bildpunkte in dem Gesicht 25 des Brillenträgers 20 von auf einem Brillengestell oder einer Brillenfassung 24 liegenden Bildpunkten getrennt werden können. Der Farbauswertungsalgorithmus enthält eine Tiefpassfilterroutine, mittels dessen die mit einer oder mehreren Bilderfassungseinrichtungen 14, 16, 18 erfassten Bilddaten b(x) geglättet werden, um auf diese Weise Daten zu erhalten, die einer näherungsweisen Darstellung des Gesichts 25 des Brillenträgers 20 ohne die von ihm getragene Brillenfassung 24 entsprechen. Die Daten dieser näherungsweisen Darstellung werden dann als ein Farbmodell für die innerhalb eines Brillenglases 28 liegenden Bildpunkte herangezogen. In dem Farbauswertungsalgorithmus f(x) kann z. B. auch ein Farbraumwechsel aus dem RGB-Farbraums in den YCbCr-Farbraum oder den HSV-Farbraum erfolgen, um auf diese Weise die Information der Helligkeit von Bildpunkten von der Information der Farbe von Bildpunkten zu trennen. Zu bemerken ist auch, dass der Farbauswertungsalgorithmus ermöglichen kann, dass ein geeigneter Farbraum aus einer Vielzahl von Bildern gelernt wird oder dass ein Farbraum, z. B. ein Hautfarbraum anhand von bestimmten Bildpunkten in dem mittels einer Bilderfassungseinrichtung 14, 16, 18 erfassten Bild eines Brillenträgers 20 etwa auf der Grundlage von Bildpunkten gelernt wird, die auf dem Nasenrücken in dem Gesicht 25 des Brillenträgers 20 liegenden Punkten entsprechen. Auch Distanzinformationen können in das Farbmodell eingehen. Je weiter ein Pixel von den Augen des Probanden entfernt ist, umso weniger wahrscheinlich gehört er zur Brillenglasregion bzw. zum Glasrand.

Die Fig. 9 zeigt im Rahmen des Farbauswertungsalgorithmus ermittelte Farbinformationsdaten f(x) als Bildpunkte in einem weiteren Graustufenbild 48. Spiegelungen oder Reflexe 54, die auf den Brillengläsern 28 und/oder der Brillenfassung 24 sichtbar sind, erzeugen starke Kanten, die leicht mit dem Brillenrand verwechselt werden können. Bildpunkte zu Spiegelungen oder Reflexen haben außerdem Farben, die von der Hautfarbe des Brillenträgers 20 und von der Farbe vieler Brillengestelle bzw. Brillenfassungen 24 verschieden sind.

Um Bildpunkte in den Bilddaten b(x) zu erkennen, die einerseits auf Spiegelungen und Reflexe des Lichts an dem Brillengestell bzw. der Brillenfassung 24 zurückgehen und andererseits auf Spiegelungen und Reflexe des Lichts an den Brillengläsern 28, gibt es in dem Algorithmus 34 eine Spiegelungsdetektionsroutine 58. Die Spiegelungsdetektionsroutine 58 erkennt in den Bilddaten b(x) Bildpunkte, deren Helligkeit oberhalb eines Schwellwerts liegt und stellt diese Information in Form von Spiegelungsinformationsdaten s(x) bereit.

Alternativ oder zusätzlich ist es für das Erkennen von entsprechenden Spiegelungen und Reflexen des Lichts allerdings auch möglich, die Bilddaten b(x) in einen anderen Farbraum zu transformieren, z. B. den CMYK-Farbraum, und in diesem dann geeignete Schwellwerte für die drei Farbkanäle festzulegen, bei deren Überschreitung ein Bildpunkt als in einer Spiegelung oder einem Reflex liegender Bildpunkt qualifiziert wird. Um Bildpunkte in den Bilddaten b(x) zu erkennen, die einerseits auf Spiegelungen und Reflexe des Lichts an dem Brillengestell bzw. der Brillenfassung 24 zurückgehen, ist es außerdem möglich, die Form von Spiegelungen und Reflexen des Lichts an den Brillengläsern 28 und der Brillenfassung 24 zu bewerten. So haben z. B. Spiegelungen auf der Brillenfassung im Regelfall eine längliche Form. In der Spiegelungsroutine können für das Erkennen von Speigelungen und Reflexen aufgrund der Form deshalb auch Formfaktoren oder ein Verhältnis der Hauptachsenlängen einer in eine Reflexion oder Spiegelung entsprechenden Menge von Bildpunkten einbeschreibbaren Ellipse benutzt werden. Zu bemerken ist, dass vorteilhafter Weise für das Erkennen von entsprechenden Spiegelungen und Reflexen des Lichts in den Bilddaten b(x) auch Distanzen von ersten Bildpunkten zu zweiten Bildpunkten bewertet werden, die Punkten entsprechen, die auf den Augen des Brillenträgers liegen.

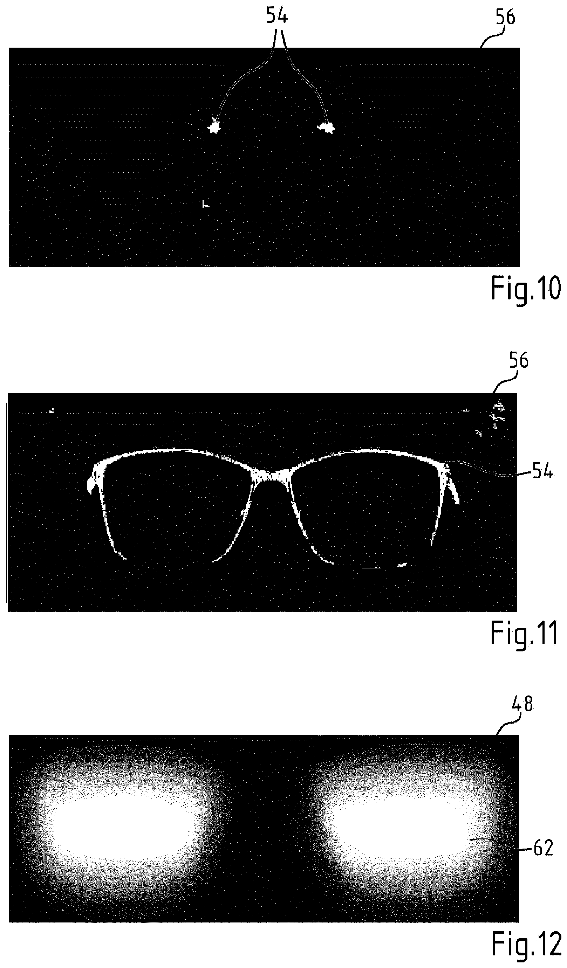

Die Fig. 10 zeigt die mittels der Spiegelungsdetektionsroutine 58 ermittelten Bildpunkte aus den Bilddaten b(x), die einem Reflex 54 bzw. einer Spiegelung auf den Brillengläsern 28 liegen in einem Schwarzweißbild 56. In der Fig. 11 sind die mittels der Spiegelungsdetektionsroutine 58 ermittelten Bildpunkte aus den Bilddaten b(x), die einem Reflex 54 bzw. einer Spiegelung auf der Brillenfassung 24 liegen, in einem Schwarzweißbild 56 gezeigt.

Um das Erkennen von Bildpunkten in den Bilddaten b(x) zu vereinfachen, die auf in einer Brillenfassung 24 eingefassten Brillengläsern 28 liegen, enthält der Algorithmus 34 eine Brillenglas-Lageroutine 60.

Die Brillenglas-Lageroutine 60 ermittelt anhand einer Vielzahl von Brillenglasinformationsdaten in Form von Brillenglasmodellen eine Wahrscheinlichkeitskarte über die Wahrscheinlichkeit, dass erfasste Bilddaten auf einem Brillenglas 28, 29 liegen. Die Fig. 12 zeigt die Wahrscheinlichkeitswerte w(x) der Wahrscheinlichkeitskarte als Wahrscheinlichkeitsinformationsdaten 62 in einem Graustufenbild 48.

Zu bemerken ist, dass alternativ hierzu auch parametrische Modelle der Form von Brillengläsern 28 geschätzt werden können, z. B. aufgrund der in den Bilddaten b(x) enthaltenen Information über die Flächen von Brillengläsern 28 oder aus in den Bilddaten b(x) enthaltener Information zu auf der Kontur von Brillengläsern 28 liegenden Bildpunkten. Dabei können dann die Parameter dieser Modelle optimiert werden.

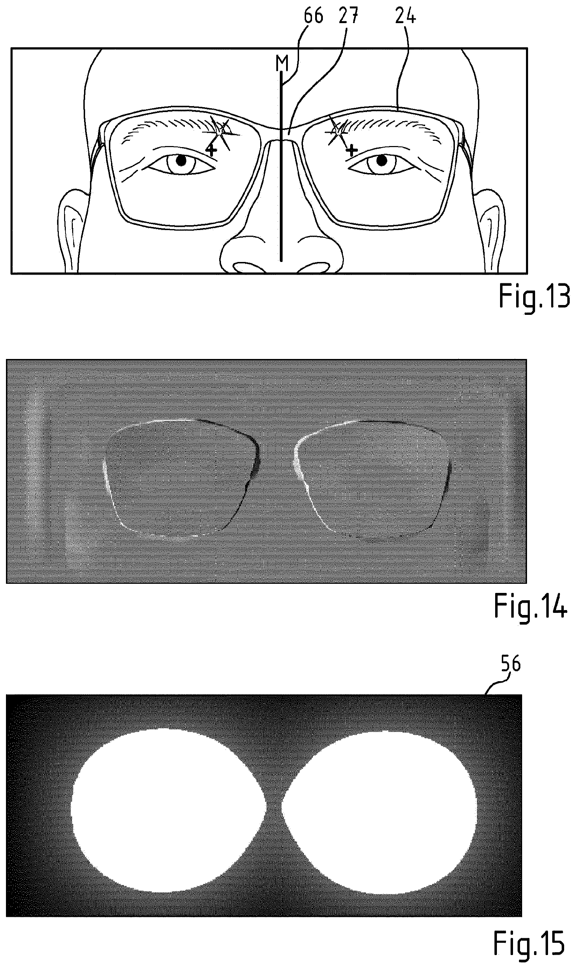

Um das Erkennen von Bildpunkten in den Bilddaten b(x) zu vereinfachen, die auf in einer Brillenfassung 24 eingefassten Brillengläsern 28 liegen, enthält der Algorithmus 34 eine Brückenmitten-Erkennungsroutine 64, die aus den Bilddaten b(x) eine Mitte M der in der Fig. 13 kenntlich gemachten Brücke 27 der Brillenfassung 24 bestimmt. Die Brückenmitten-Erkennungsroutine 64 berechnet mittels Bildverarbeitung die Mitte der Brücke 27 der Brillenfassung 24 durch Bestimmen der Mitte des Rands des linken und rechten Brillenglases 28 aus den mit einer Bilderfassungseinrichtung 14, 16, 18 erfassten Bilddaten b(x). Die Fig. 13 zeigt den mittels der Gesichtsmerkmal-Erkennungsroutine 40 aus den Bilddaten b(x) ermittelten Bilddaten in dem gesuchten Bildausschnitt 38 (Region of Interest) mit der Brillenfassung 24 und einer aus den Bilddaten b(x) bestimmten Brückenmitte 66. Zu bemerken ist, dass die Brückenmitte 66 auch z. B. mit Hilfe der Mittelpunkte zwischen detektierten Pupillenmitten, mit Hilfe der Position des Nasenrückens, mit Hilfe einer gewichteten Kombination dieser beiden Merkmale oder mittels Machine Learning Verfahren basierend auf Beispieldatensätzen bestimmt werden kann.

Die Brückenmitten-Erkennungsroutine 64 in dem Algorithmus 34 übermittelt die Information der Brückenmitte 66 an eine Symmetrieroutine 68.

Der Algorithmus 34 weist außerdem eine Triangulationsroutine 69 auf, die aus der Information der Bilddaten b(x) eines weiteren Bild 37, das mit einer anderen Bilderfassungseinrichtungen 14, 16, 18 erfasst ist, anhand von in einer Kalibrierroutine 39 als Apparatekonstante bekannten Kalibrier-Informationen zu den Bilderfassungseinrichtungen 14, 16, 18 durch Triangulation in der Fig. 14 gezeigte Tiefenkarteninformationsdaten t(x) berechnet.

Unter den Kalibier-Informationen zu einer Bilderfassungseinrichtung 14, 16, 18 werden dabei extrinsische Eigenschaften wie die relative Ausrichtung der Aufnahmerichtung 19 im Raum einer Bilderfassungseinrichtung, d. h. die relative Ausrichtung der optischen Achse der Aufnahmerichtung 19 als auch die intrinsischen Eigenschaften der Bilderfassungseinrichtung 14, 16, 18 verstanden, also die Eigenschaften der Bilderfassungseinrichtung 14, 16, 18, die definieren, wie die Koordinaten eines Punkts im Raum in einem zu der entsprechenden Bilderfassungseinrichtung 14, 16, 18 referenzierten Koordinatensystem, der in die Bildebene des Bildsensors 15 der Bilderfassungseinrichtung 14, 16, 18 abgebildet wird, in die Koordinaten des in der Bildebene des Bildsensors 15 liegenden Bildpunkts dieses Punkts überführt werden. Eine ausführliche Beschreibung der Kalibrierung von Bilderfassungseinrichtungen in Form von Kameras findet sich z. B. auf S. 8 in dem Lehrbuch "Multiple View Geometry in Computer Vision" von Richard Hartley und Andrew Zisserman, 2. Auflage, Cambridge University Press 2004, auf das hiermit Bezug genommen und dessen Offenbarung in die vorliegende Beschreibung der Erfindung mit einbezogen wird.

Die Information der Tiefenkarteninformationsdaten entspricht einer Tiefenkarte in Form einer Punktewolke, die es ermöglicht, die räumliche Ausdehnung von 3D-Brillengläsern z. B. in Form von Ebenen als Approximation an die wahre Glaskontur zu schätzen.

Die Tiefenkarteninformationsdaten t(x) werden einer Routine zu Stereoannahmen 71 zugeführt.

Der Algorithmus 34 enthält eine Kostenfunktionsroutine 70. In der Kostenfunktionsroutine 70 werden die Kanteninformationsdaten g(x) eines in der Fig. 8 als Graustufenbild 48 gezeigten Kanteninformationsbilds 46 und die um Spiegelungen und Reflexe sowie anhand von Brillenglasmodellen korrigierten, in der Fig. 9 als ein Graustufenbild 48 gezeigten Farbinformationsdaten f(x) sowie Symmetriebewertungsdaten r(x) und Stereobewertungsdaten d(x), welche auch die Information der Tiefenkarteninformationsdaten t(x) enthalten, mit Brillenglasdaten u(x) zu einer deterministisch optimierbaren Kostenfunktion E(u) verknüpft. Diese Kostenfunktion E(u) wird dann in einer Optimierungsroutine 75 des Algorithmus 34 deterministisch optimiert.

Die Fig. 15 ist eine Repräsentation von Brillenglasdaten u(x) als Initialdaten für eine Optimierungsroutine 75 in dem in der Fig. 4 gezeigten Algorithmus 34. Die Fig. 15 zeigt die Brillenglasdaten u(x) als ein Schwarzweißbild 56 in Form der Werte einer binären Funktion $u: \Omega \rightarrow \{0,1\}$, die innerhalb der Fläche der Brillengläser den Wert 1 und außerhalb den Wert 0 annimmt. $\Omega \subset \mathbb{R}2$ bezeichnet dabei die Bildkoordinaten des Bildes, in dem die Brillengläser detektiert werden sollen. Die sogenannte distributive Ableitung dieser binären Funktion entspricht dann dem gesuchten Rand 26 eines in der Fig. 2 gezeigten Brillenglases 28.

Eine Repräsentation von Brillenglasdaten u(x) kann aber auch z. B. in einer Folge von n Punkten $p_1,...,p_n \in \Omega$ bestehen, die auf dem Rand 26 eines in der Fig. 2 gezeigten Brillenglases 28 liegen und die diesen Rand damit beschreiben. Eine Repräsentation von Brillenglasdaten u(x) kann auch eine geschlossene Kurve

$$\mathcal{C}: \mathbb{R} \rightarrow \Omega$$

sein, welche die Kontur eines Brillenglases 28 beschreibt. Solche Kurven können insbesondere über die Kurvenlänge parametrisiert werden. Um eine Stetigkeit und geringe Krümmung der Kurven zu gewährleisten, ist es möglich, solche Kurven z. B. als Linearkombination von geeigneten Basisfunktionen zu beschreiben, z. B. Basisfunktionen in Form von Splines. Zu bemerken ist auch, dass die räumliche Ausdehnung von Brillengläsern 28 mittels einer impliziten Funktion repräsentiert werden kann, insbesondere anhand einer 3D Funktion $\Omega \rightarrow \mathbb{R}^3$, deren Niveaumenge zu einem bestimmten Wert, z. B. 0, genannt Level Sets, d. h. die Werte des Definitionsbereichs dieser Funktion, die auf den gleichen Wert abgebildet werden, definieren den Rand des Brillenglases 28 in Form einer Randkurve. Gleichzeitig definieren die negativen Werte die Brillenglasfläche und die positiven die Region außerhalb der Brillengläser oder umgekehrt.

Die in der Kostenfunktionsroutine 70 des Algorithmus 34 generierte deterministisch optimierbare Kostenfunktion E(u) ist nachfolgend wiedergegeben. Es gilt:

$$E(u) := \mu E_{color}\big( u(x) \big) + E_{edge}\big( u(x) \big) + \delta E_{sym}\big( u(x) \big) + \gamma E_{stereo}\big( u(x) \big)$$

mit dem Farbkostenterm

$$E_{color}\big( u(x) \big) := \int_{\Omega} u(x)f(x)\, dx,$$

wobei die Brillenglasdaten u(x) die räumliche Ausdehnung wenigstens eines in der Brillenfassung 24 gehaltenen Brillenglases 28 beschreiben und wobei f(x) die aus den Bilddaten b(x) ermittelten Farbinformationsdaten f(x) sind, und mit dem Kantenkostenterm

$$E_{edge}\big( u(x) \big) := \int_{\Omega} g(x)|D\, u(x)|,$$

wobei D der Gradient von u im distributiven Sinne ist und der Term die mit den Kanteninformationsdaten g(x) gewichtete Konturlänge der Brillengläser berechnet, die minimal ist, wenn die Brillenglasdatenkanten mit den detektierten Kanten aus den Bilddaten b(x) übereinstimmen,
mit dem Symmetriekostenterm

$$E_{sym}\big( u(x) \big),$$

der die Symmetrie eines linken und eines rechten Brillenglases 28 bezüglich einer Mittelebene in der Brillenfassung 24 bewertet,
und mit dem Stereokostenterm

$$E_{stereo}\big( u_i(x), u_j(x) \big) \quad,$$

$1 \le i, j \le n$, der Punkte innerhalb der Brillengläser in mehreren Bildansichten aufeinander bezieht.

$\mu$, $\gamma$ sowie $\delta$ sind Gewichtungsfaktoren der einzelnen Terme, die den Einfluss der einzelnen Größen auf das Gesamtergebnis bestimmen.

In dem Farbkostenterm $E_{color}(u(x))$ wird die Farbe der Bilddaten b(x) mit Brillenglasdaten u(x) korreliert und bewertet. Der Kantenkostenterm $E_{edge}(u(x))$ ist eine Korrelation von Bildkanten in den Bilddaten b(x) mit der distributiven Ableitung der Brillenglasdatenfunktion u(x). Der Symmetriekostenterm $E_{sym}(u(x))$ korreliert in den Bilddaten b(x) enthaltene Symmetrien mit Brillenglasdaten u(x), indem die Brillenglasdaten u(x) an der Mittelebene durch die Brückenmitte gespiegelt und Abweichungen der Brillenglasdaten u(x) von den gespiegelten Daten bewertet werden.

In dem Symmetriekostenterm $E_{sym}(u(x))$ kann eine auf den Tiefenkarteninformationsdaten t(x) beruhende 3D-Symmetrieannahme verrechnet werden, wonach ein linkes und ein rechtes Brillenglas in der Brillenfassung 24 zu einer 3D-Ebene symmetrisch ist, welche durch die in der Brückenmitten-Erkennungsroutine 64 bestimmte linienförmige Brückenmitte 66 und durch bekannte Kalibier-Informationen einer der Bilderfassungseinrichtungen 14, 16, 18 in der Vorrichtung 10 definiert ist.

Der ermittelten 3D-Ebene wird in dem Symmetriekostenterm $E_{sym}(u(x))$ die Funktion einer Spiegelebene zuerkannt, welche die im dreidimensionalen Raum auf einem linken und rechten Brillenglas liegende Punkte aufeinander abbildet, wobei in dem Symmetriekostenterm $E_{sym}(u(x))$ Abweichungen r(x) von Ist- zu Sollwerten dieser Abbildung bewertet werden. Der Symmetrieterm $E_{sym}(u(x))$ weist dann Brillenglasdaten u(x), die zwei Brillengläsern entsprechen, die zueinander nicht symmetrisch sind, Kostenwerte zu, die umso größer sind, je größer die in dem Algorithmus 34 als Symmetriebewertungsdaten r(x) fungierende Abweichungen der beiden Brillengläser sind. Auf diese Weise ist sichergestellt, dass die bei Optimieren der Kostenfunktion aufgefundenen Brillenglasdaten u(x) zueinander symmetrische Brillengläser beschreiben. Alternativ hierzu ist es auch möglich, in einer Zwangsbedingung vorzugeben, dass die durch das Optimieren der Kostenfunktion aufgefundenen Brillenglasdaten u(x) symmetrisch sind.

Zu bemerken ist, dass es möglich ist, in dem Symmetriekostenterm $E_{sym}(u(x))$, auch wenn keine Tiefenkareninformationsdaten vorliegen, 2D-Symmetrieannahmen zu verrechnen, z. B. indem die Brillenglasdaten u(x) eines linken Brillenglases 28 an der Brückenmitte 66 in der Bildebene des Bildsensors 15 einer Bilderfassungseinrichtung 14, 16, 18 auf die Brillenglasdaten u(x) eines rechten Brillenglases 29 gespiegelt und dann wiederum Abweichungen r(x) von Istwerten zu Sollwerten berechnet werden, die in die Kostenfunktion eingehen.

Zu bemerken ist, dass es Kalibrier-Informationen zu mehreren Bilderfassungseinrichtungen auf der Grundlage von Bilddaten u(x), die mindestens zwei mittels der Bilderfassungseinrichtung erfassten Bildern entsprechen, ermöglichen, die Robustheit des Algorithmus zu erhöhen. Insbesondere ermöglichen solche Kalibier-Informationen, dass anhand der Bilddaten b(x) zu diesen Bildern ein Innenrand der Brillenfassung bzw. ein Rand der Brillengläser gleichzeitig in allen oder mehreren Bildern optimiert und Glasranddaten $u_1(x)$,..., $u_n(x)$ für je zwei Bilder während der Optimierung mittels der Kalibier-Informationen in einem Stereokostenterm $E_{stereo}(u_i(x), u_j(x))$ aufeinander bezogen werden können. Dadurch können sich die Glasranddaten in den verschiedenen Bildern gegenseitig beeinflussen, indem Abweichungen sich entsprechender Punkte in $u_i(x)$ und $u_j(x)$, $1 \leq i, j \leq n$, bestraft werden.

Um die aus zwei Bildern $u_i(x)$ und $u_j(x)$ ermittelten Glasranddaten aufeinander zu beziehen, kann in die Kostenfunktion E(u) auch ein weiterer Kostenterm eingeführt werden oder es kann für das Optimieren der Kostenfunktion eine Zwangsbedingung vorgegeben werden, die auf dem Berechnen von Stereoinformationen beruht. Solche Stereoinformationen können beinhalten, dass zu einem jeden Bildpunkt in einem mit einer ersten Bilderfassungseinrichtung erfassten Bild derjenige Bildpunkt in einem zweiten Bild aufgefunden wird, auf den der gleiche 3D-Punkt abgebildet wird. Dafür können z. B. Stereo-Algorithmen verwendet werden, die für jeden Punkt in jedem Bildpaar die zugehörige Disparität und daraus deren Tiefe im Raum bestimmen. Für eine höhere Robustheit kann auch ein 3D-Modell an diese Disparitätskarten bzw. die zugehörigen Tiefenkarten angepasst werden. Auf der Grundlage dieser Informationen kann dann eine Zwangsbedingung oder ein Kostenterm vorgegeben werden, der eine als Stereobewertungsdaten d(x) fungierende Abweichung von Brillenglasdaten $u_i(x)$ von den zugehörigen Stereopunkten in den Brillenglasdaten $u_j(x)$ berechnet. Diese Stereobewertungsdaten d(x) können insbesondere für ein jedes Bildpaar berechnet werden.

Die Stereobewertungsdaten d(x) können als ein zusätzlicher Kostenterm $E_{S-tereo}(u_i(x), u_j(x))$ in der Kostenfunktion E(u) berücksichtigt werden oder als eine Zwangsbedingung beim Optimieren der Kostenfunktion E(u), die sicherstellt, dass es zwischen Brillenglasdaten u(x), denen unterschiedliche Bilder zugrunde liegen, die mit einer oder mehreren Bilderfassungseinrichtungen erfasst werden, keine Unterschiede geben darf.

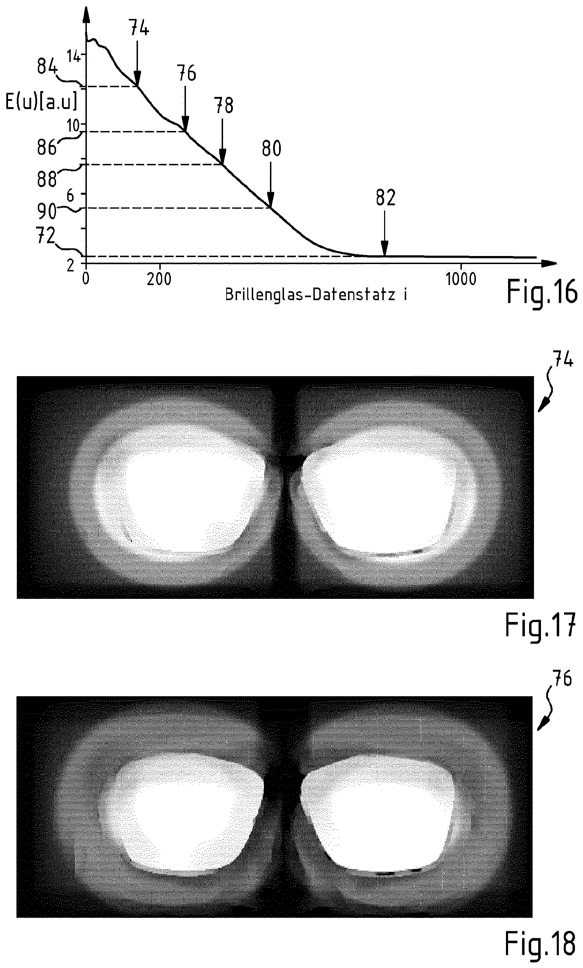

Die Fig. 16 zeigt die Werte der Kostenfunktion E(u) für unterschiedliche Zwischenergebnisse i = 0, 1, 2, 3, ... der Optimierungsroutine für Brillenglas-Datensätze mit Brillenglasdaten u(x). Mittels Variieren der Brillenglasdaten u(x) kann die Kostenfunktion E(u) auf ein Minimum 72 optimiert werden. Diese Maßnahme ermöglicht dann das Auffinden derjenigen Brillenglasdaten u(x), die den Rand eines an die von dem Brillenträger 20 getragene Brillenfassung 24 angepassten Brillenglases 28 präzise beschreiben.

Der Algorithmus 34 enthält eine Optimierungsroutine 75, die zu der Kostenfunktion der Kostenfunktionsroutine 70 diejenigen Brillendaten u(x) bestimmt, zu denen die Kostenfunktion E(u) minimal ist.

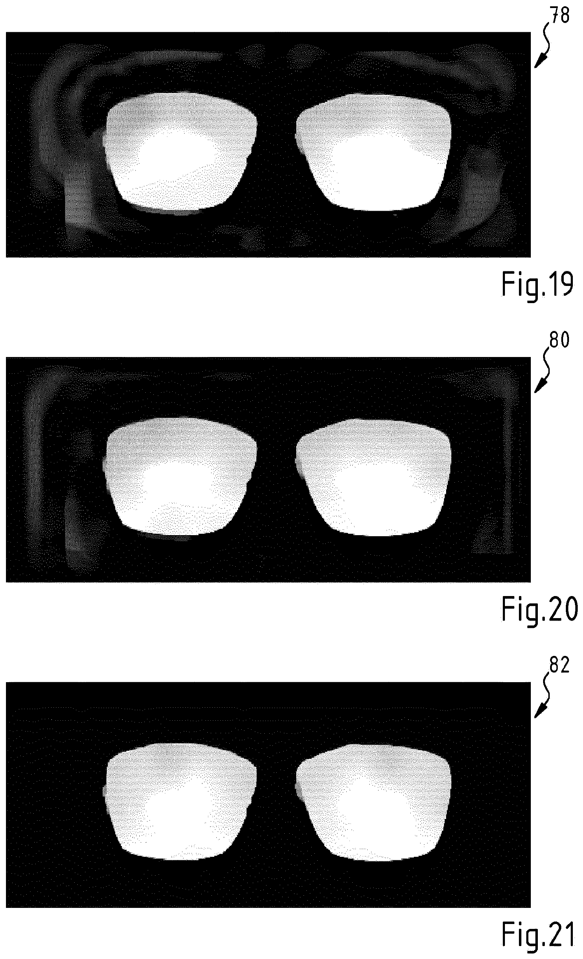

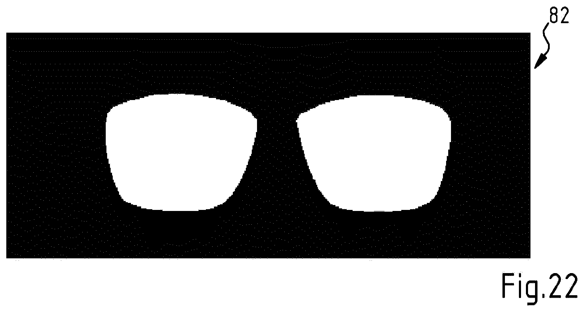

Die Fig. 17 bis Fig. 22 zeigen als Schwarzweißbilder 56 Repräsentationen 74, 76, 78, 80 und 82 zu unterschiedlichen Brillenglas-Datensätzen i, i=74, i=76, i=78, i=80 und i=82 betreffend Brillenglasdaten u(x), die den in der Fig. 16 kenntlich gemachten Werten 84, 86, 88, 90 und dem Minimum 72 der Kostenfunktion E(u) entsprechen. Die in der Fig. 15 repräsentierten Brillenglasdaten u(x) sind ein Initialdatensatz, anhand dessen die Kostenfunktion E(u) optimiert wird. Die in der Fig. 22 repräsentierten Brillenglasdaten u(x) sind die durch das Optimieren der Kostenfunktion E(u) aufgefundenen. Sie enthalten in Form des Rands der beiden Flächen 94, 96 die Information des gesuchten Rands von Brillengläsern 28, die für das Einfassen in die von dem in der Fig. 1 gezeigten Brillenträger 20 getragenen Brillenfassung 24 geeignet sind. In dem Algorithmus 34 wird der gesuchte Rand eines Brillenglases 28 aus dem durch Optimieren der Kostenfunktion E(u) aufgefundenen Brillenglasdaten u(x) in einer Randberechnungsroutine 77 bestimmt. Diese Randberechnungsroutine 77 kann auch vorsehen, dass aus dem gesuchten Tragrand eines Brillenglases ein Glasaußenrand berechnet wird, z. B. indem vorgegeben wird, dass der Glasaußenrand einen festen Abstand von dem ermittelten Tragrand des entsprechenden Brillenglases 28 hat.

Die Kostenfunktion E(u) ist damit eine Summe von Energietermen und unterliegt Zwangsbedingungen. An die Brillenglasdaten werden 2D und/oder 3D-Symmetrie-Bedingungen gestellt. Das Optimieren der Kostenfunktion u(x) erfolgt nur innerhalb der in dem relevanten Bildausschnitt 38 liegenden Bilddaten b(x).

Die angegebene Kostenfunktion ist deterministisch optimierbar, da jeder einzelne Term deterministisch optimierbar ist und dadurch auch die Linearkombination. Insbesondere sind $E_{color}(u(x))$ und $E_{edge}(u(x))$ konvexe Terme, die mit Verfahren wie primal-dual Verfahren oder Gradientenabstiegsverfahren global optimiert werden können. $E_{sym}(u(x))$ kann ebenfalls als konvexer Term formuliert werden, falls die 3D- oder 2D-Spiegelebene bekannt ist oder als solche angenommen wird. Wird diese während der Optimierung mitgeschätzt, ist der Term nicht konvex, kann aber trotzdem mit deterministischen Verfahren so optimiert werden, dass man zu einer brauchbaren Lösung kommt - z. B. indem die Optimierung alternierend stattfindet, d. h. die Spiegelebene jeweils nach einer festen Anzahl von Schritten basierend auf der aktuellen Lösung angepasst wird. Der Term $E_{stereo}(u_i(x), u_j(x))$ kann ebenso konvex formuliert werden, wenn die Stereo-Abbildung zwischen den einzelnen Bildpunkten bekannt ist. Dies ist z. B. der Fall, wenn ein Stereo-Algorithmus basierend auf den Bilddaten zuvor ausgeführt wurde. Wird die Stereo-Abbildung während der Optimierung aus der aktuellen Lösung geschätzt, so ist der Term nicht mehr konvex, kann aber dennoch wie der Symmetrieterm alternierend deterministisch optimiert werden, sodass man zu einer brauchbaren Lösung kommt.

Zu bemerken ist, dass es möglich ist, die Energieterme in der Kostenfunktion E(u) zu gewichten. Insbesondere ist es möglich, einzelne Energieterme in der Kostenfunktion E(u) mit dem Faktor 0 zu gewichten, d. h. einzelne Energieterme in der Kostenfunktion E(u) wegzulassen und somit nicht zu berücksichtigen. Außerdem ist es möglich, die Länge des Rands der Brillengläser 28 insbesondere über die erste Ableitung dieser Kurve zu minimieren. Es ist auch möglich, Abweichungen von dem Farbmodell unter Berücksichtigung eines Glasmodells und der bei dem Erfassen von Spiegelungen und/oder Reflexionen generierten Informationen zu bestrafen. Schließlich ist zu bemerken, dass die in dem Algorithmus 34 berücksichtigten, aus Glasebenen ermittelten 2D-und 3D-Symmetriebedingungen auf 3D-Informationen beruhen können, die auch das Ermitteln von Zentrierparametern ermöglichen.

Grundsätzlich kann die Kostenfunktion E(u) auf unterschiedliche Art minimiert werden. Es ist insbesondere möglich, die Kostenfunktion E(u) z. B. über kontinuierliche Methoden, primal-dual-Ansätze, graphen-theoretische Methoden, diskrete Graph-Cut Methoden, Active Contour Modelle, Simplexverfahren oder ähnliches zu minimieren.

Kontinuierliche Methoden sind dadurch definiert, dass sie das Bild als kontinuierliche Funktion beschreiben und dadurch die Kostenfunktion auf einem kontinuierlichen mathematischen Raum definiert ist. Die Diskretisierung der Kostenfunktion auf Basis von Bildpunkten erfolgt dann erst in einem letzten Schritt vor der Optimierung. Im Gegensatz dazu definieren diskrete Optimierungsmethoden die Optimierungsfunktion direkt auf Pixelebene.

Zu bemerken ist auch, dass, wie in der Puplikation C. Niewenhuis et. al. Spatially Varying Color Distributions for Interactive Maulilabel Segmentation, IEEE Transactions on Pattern Analysis and Machine Intelligence, 35, 1 (2013) beschrieben ist, kontinuierliche Methoden gegenüber diskreten den Vorteil haben, dass sie Artefakte an Kanten vermeiden und sehr viel leichter parallelisierbar sind. Das Parallelisieren ermöglicht insbesondere schnelle Berechnungen auf einer Graphikkarte eines Computers.

Zu bemerken ist in diesem Zusammenhang insbesondere, dass die in dem Algorithmus 34 berücksichtigten, aus Glasebenen ermittelten 2D- und 3D-Symmetriebedingungen auf 3D-Informationen beruhen, die auch das Ermitteln von Zentrierparametern ermöglichen.

Zu bemerken ist darüber hinaus, dass die vorstehend beschriebenen Modelle der Form von Brillengläsern 28 auch als eine Zwangs- bzw. Nebenbedingung bei dem Optimieren der Kostenfunktion E(u) herangezogen werden können. Eine solche Zwangs- bzw. Nebenbedingung kann z. B. sein, dass der ermittelte finale Rand eines Brillenglases 28 innerhalb des zuvor gelernten Modellraumes liegt. Es versteht sich, dass statt Modelle aus Beispielen zu lernen, diese auch definiert werden können.

Der vorstehend beschriebene Algorithmus 34 kann grundsätzlich auch durchgeführt werden, ohne dass eine oder mehrere Routinen der vorstehend beschriebenen Routinen aus der Gruppe Gesichtsmerkmal-Erkennungsroutine 40, Spiegelungsdetektionsroutine 58, Brillenglas-Lageroutine 60, Brückenmitten-Erkennungsroutine 64 oder Triangulationsroutine 69 durchgeführt werden. Auch kann der vorstehend beschriebene Algorithmus 34 durchgeführt werden, ohne dass die zu optimierende Kostenfunktion E(u) einen Symmetriekostenterm $E_{sym}(u(x))$ enthält oder unter Berücksichtigung einer Symmetrie-Zwangsbedingung optimiert wird. Die zu optimierende Kostenfunktion E(u) muss auch nicht zwingend gleichzeitig einen Farbkostenterm $E_{color}(u(x))$ und einen Kantenkostenterm $E_{edge}(u(x))$ enthalten.

Insbesondere kann der Algorithmus 34 auch mit Bilddaten b(x) durchgeführt werden, welche die Information lediglich eines mit einer einzigen Bilderfassungseinrichtung 16 erfassten Bilds des in der Fig.1 gezeigten Brillenträgers 20 enthalten. Im Rahmen der Erfindung müssen nicht zwingend Bilddaten b(x) bereitgestellt werden, die auf mit einer Bilderfassungseinrichtung 14, 16, 18 aus unterschiedlichen Aufnahmerichtungen erfassten Bilddaten b(x) zu dem Gesicht 25 des Brillenträgers 20 mit einer von diesem getragenen Brillenfassung 24 beruhen.

Zu bemerken ist, dass von dem vorstehend beschriebene Ermitteln der Repräsentation des Rands 26 eines Brillenglases 28, 29 auch beim Zentrieren eines linken Brillenglases 28 oder eines rechten Brillenglases 29 in eine Brillenfassung 24 Gebrauch gemacht werden kann.

So können z. B. in einem Schritt (i) zu dem Brillenglas 28, 29 Zentrierparameter bestimmt werden, wobei das Bestimmen der Zentrierparameter das vorstehend angegebene Ermitteln der Repräsentation des Rands 26 des Brillenglases 28, 29 umfasst, und es werden in einem weiteren Schritt (ii) das Brillenglas 28, 29 mit den in dem vorausgehenden Schritt (i) bestimmten Zentrierparametern in die Brillenfassung 24 zentriert.

Ein linkes Brillenglases 28 oder ein rechtes Brillenglases 29 können in eine Brillenfassung 24 eingeschliffen werden, indem in einem Schritt (i) Zentrierparameter bestimmt werden, wobei das Bestimmen der Zentrierparameter das Ermitteln der Repräsentation des Rands 26 des Brillenglases 28, 29 mit einem vorstehend angegebenen Verfahren umfasst. In einem weiteren Schritt (ii) kann das entsprechende Brillenglas 28, 29 dann basierend auf den in dem vorausgehenden Schritt (i) bestimmten Zentrierparametern für eine Anordnung in der Brillenfassung 24 eingeschliffen werden.

Ein linkes Brillenglas 28 oder ein rechtes Brillenglas 29 kann auch hergestellt werden, indem von einem Verfahrensschritt des Einschleifens des Brillenglases 28, 29 in eine Brillenfassung 24 nach einem vorstehend angegebenen Verfahren Gebrauch gemacht wird.

Zu bemerken ist, dass beim Herstellen einer Brille auch von einem oder mehreren der vorstehend angegebenen Verfahren Gebrauch gemacht werden kann.

Bezugszeichenliste

| | |
|---|---|
| 10 | Vorrichtung |
| 12 | Säule |
| 14, 16, 18 | Bilderfassungseinrichtung |
| 15 | Bildsensor |
| 19 | Aufnahmerichtung |
| 20 | Brillenträger |
| 21 | Rechnereinheit |
| 22 | Eingabeschnittstelle |
| 23 | Ausgabeschnittstelle |
| 24 | Brillenfassung |
| 25 | Gesicht |
| 26 | Rand |
| 27 | Brücke der Brillenfassung |
| 28 | linkes Brillenglas |
| 29 | rechtes Brillenglas |
| 30 | Seitenfläche |
| 31 | Vertikale |
| 32 | Koordinatensystem |
| 34 | Algorithmus |
| 36 | Bild |
| 37 | weiteres Bild |
| 38 | Bildausschnitt |
| 39 | Kalibrierroutine |
| 40 | Gesichtsmerkmal-Erkennungsroutine |
| 42 | Datenmuster |
| 44 | Kantendetektionsroutine |
| 46 | Kanteninformationsbild |
| 48 | Graustufenbild |
| 50 | Farbauswertungsroutine |
| 52 | Farbinformationsbild |
| 54 | Spiegelungen/Reflexe |
| 56 | Schwarzweißbild |
| 58 | Spiegelungsdetektionsroutine |
| 60 | Brillenglas-Lageroutine |
| 62 | Wahrscheinlichkeitsinformationsdaten |
| 64 | Brückenmitten-Erkennungsroutine |
| 66 | Brückenmitte |
| 68 | Symmetrieroutine |
| 69 | Triangulationsroutine |
| 70 | Kostenfunktionsroutine |
| 71 | Stereoannahme |
| 72 | Minimum |
| 74 | Repräsentation |
| 75 | Optimierungsroutine |
| 77 | Randberechnungsroutine |
| 76, 78, 80, 82 | Repräsentationen von Brillenglas-Datensätzen über Brillenglasdaten u(x) |
| 84, 86, 88, 90 | Werte der Kostenfunktionswerte E(u) |
| 94, 96 | Fläche |
| A | Aufnahmeabstand |
| bw | Abstand Brillengläser |
| b(x) | Bilddatensatz / Bilddaten |
| E | Einschleifhöhe |
| E(u) | Kostenfunktion |
| f(x) | Farbinformationsdaten |

| | |
|---|---|
| g(x) | Kanteninformationsdaten |
| HS | Hornhaut-Scheitelabstand |
| sb | Scheibenbreite |
| sh | Scheibenhöhe |
| d(x) | Stereobewertungsdaten |
| di(x) | Brillenglasforminformationsdaten |
| r(x) | Symmetriebewertungsdaten |
| s(x) | Spiegelungsinformationsdaten |
| t(x) | Tiefenkarteninformationsdaten |
| u(x) | Brillenglasdaten |
| w(x) | Wahrscheinlichkeitswerte |
| $\alpha$ | Vorneigungswinkel |
| $\beta$ | Fassungsscheibenwinkel |

**Patentansprüche**

1. Computerimplementiertes Verfahren zum Ermitteln der Repräsentation des Rands (26) eines Brillenglases (28) oder eines linken Brillenglases (28) und eines rechten Brillenglases (29) für einen Brillenträger (20) umfassend das

   Bereitstellen eines Bildes (36) des Brillenträgers (20) mit Bilddaten b(x) zu dem Brillenträger (20) mit einer getragenen Brillenfassung (24), und das
   Bereitstellen von Informationsdaten I(x), die aus den Bilddaten b(x) des Bildes (36) des Brillenträgers (20) berechnete Daten zu Informationen des Bildes (36) sind, wobei die Informationsdaten I(x) ein aus den erfassten Bilddaten b(x) mittels eines Kantendetektionsalgorithmus ermitteltes Kanteninformationsbild g(x) (46) umfassen,
   Berechnen einer die Informationsdaten I(x) mit Brillenglasdaten u(x) verknüpfenden deterministisch optimierbaren Kostenfunktion E(u), wobei die Brillenglasdaten u(x) die räumliche Ausdehnung wenigstens eines in der Brillenfassung (24) gehaltenen Brillenglases (28) beschreiben,

   - Festlegen eines Verlaufs eines Rands (26) des Brillenglases (28) oder des linken Brillenglases (28) und des rechten Brillenglases (29) durch Optimieren der Kostenfunktion E(u).

   **dadurch gekennzeichnet, dass**
   der Kantendetektionsalgorithmus ein speziell auf Brillenkanten mittels Machine Learning Verfahren trainierter Kantendetektor ist, der Brillenfassungskanten von Nicht-Brillenfassungskanten oder äußere von inneren Brillenfassungskanten unterscheiden kann.

2. Verfahren nach Anspruch 1, **dadurch gekennzeichnet, dass** die Informationsdaten I(x) ein aus den erfassten Bilddaten b(x) mittels eines die Farbe von Bilddaten b(x) auswertenden Farbauswertungsalgorithmus ermitteltes Farbinformationsbild (52) umfassen.

3. Verfahren nach Anspruch 1, **dadurch gekennzeichnet, dass** die Kostenfunktion E(u) eine gewichtete Summe eines Kantendetektionskostenterms $E_g(u)$ und eines Farbauswertungskostenterms $E_f(u)$ ist.

4. Verfahren nach Anspruch 1 oder 3, **dadurch gekennzeichnet, dass** der Kantendetektionsalgorithmus für die Kantendetektion auf eine Filterbank mit gelernten Kantendetektoren zugreift.

5. Verfahren nach einem der Ansprüche 1 bis 4, **dadurch gekennzeichnet, dass** die Informationsdaten I(x) aus Ausschnitts-Bilddaten $b_A(x)$ des Bildausschnitts (38) berechnet werden,
   und/oder

   dass die Informationsdaten I(x) Daten zu einem Farbmodell und/oder zu einem Kantenbild und/oder zu einer Farbwahrscheinlichkeitsverteilung und/oder zu einem Objekt in dem Bild (36) enthalten,
   und/oder
   dass das Berechnen von aus den Bilddaten abgeleiteten Informationsdaten I(x) das Ermitteln von Spiegelungsinformationsdaten s(x) mit einem Algorithmus für das Erkennen von Spiegelungen an der Brillenfassung oder an einem in der Brillenfassung aufgenommenen Brillenglas umfasst oder dass das Berechnen von aus den Bilddaten abgeleiteten Informationsdaten I(x) das Ermitteln von Spiegelungsinformationsdaten s(x) mit einem Algorithmus für das Erkennen von Spiegelungen an der Brillenfassung und an einem in der Brillenfassung aufgenommenen Brillenglas umfasst, wobei der Algorithmus Spiegelungen an der Brillenfassung von Spiegelungen an dem Brillenglas unterscheidet,

und/oder

dass das Berechnen von aus den Bilddaten b(x) abgeleiteten Informationsdaten I(x) das Ermitteln von Brillenglasforminformationsdaten di(x) mit einem Algorithmus umfasst, der anhand eines dem Algorithmus zugeführten Brillenglasmodells oder anhand einer Vielzahl von dem Algorithmus zugeführten Brillenglasmodellen als Brillenglasforminformationsdaten di(x) eine 2D-Form oder eine 3D-Form eines in der Brillenfassung (24) aufnehmbaren Brillenglases (28, 29) und/oder ein parametrisches Modell oder eine Wahrscheinlichkeiten repräsentierende Karte über die Wahrscheinlichkeit, dass erfasste Bilddaten b(x) auf einem Brillenglas (28, 29) liegen, angibt,

und/oder

dass die aus den Bilddaten b(x) abgeleiteten berechneten Informationsdaten I(x) eine mittels eines Brückenmittendetektionsalgorithmus ermittelte Brückenmitte M umfassen,

und/oder

dass die Kostenfunktion E(u) für das Ermitteln des Rands eines linken Brillenglases (28) und eines rechten Brillenglases (29) für einen Brillenträger (20) eine Symmetrie von Brillenglasdaten u(x) bewertet,

und/oder

dass in der Kostenfunktion E(u) mindestens ein aus Daten maschinell gelerntes Modell enthalten ist,

und/oder

dass die Kostenfunktion E(u) konvex ist.

6. Verfahren nach einem der Ansprüche 1 bis 5, **dadurch gekennzeichnet, dass** den bereitgestellten Bilddaten b(x) zu dem Brillenträger (20) aus wenigstens zwei unterschiedlichen Blickwinkeln aufgenommene Bilder zugrunde liegen.

7. Verfahren nach Anspruch 6, **dadurch gekennzeichnet, dass** die Kostenfunktion E(u) für das Ermitteln des Rands (26) eines linken Brillenglases (28) und eines rechten Brillenglases (29) für einen Brillenträger (20) mit einer Stereobedingung aufeinander abgebildete Punkte in Brillenglasdaten u(x) zu Bildern bewertet, die unterschiedlichen Aufnahmerichtungen (19) einer Bilderfassungseinrichtung (14, 16, 18) entsprechen.

8. Computerprogramm umfassend Programmcode, welcher, wenn in einem Computersystem geladen und ausgeführt, zur Durchführung eines Verfahrens nach einem der vorangegangenen Ansprüche ausgelegt ist.

9. Vorrichtung zum Ermitteln des Verlaufs des Rands eines Brillenglases (28) oder eines linken Brillenglases (28) und/oder eines rechten Brillenglases (29) für einen Brillenträger (20),

mit wenigstens einer Bilderfassungseinrichtung (14, 16, 18) zum Bereitstellen eines Bildes (36) des Brillenträgers (20) mit Bilddaten b(x) zu dem Brillenträger (20) mit einer getragenen Brillenfassung (24),

mit Mitteln zum Bereitstellen von Informationsdaten I(x), die aus den Bilddaten b(x) des Bildes (36) des Brillenträgers (20) berechnete Daten zu Informationen des Bildes (36) sind, wobei die Informationsdaten I(x) ein aus den erfassten Bilddaten b(x) mittels eines Kantendetektionsalgorithmus ermitteltes Kanteninformationsbild g(x) (46) umfassen,

mit Mitteln zum Berechnen einer die Informationsdaten I(x) mit Brillenglasdaten u(x) verknüpfenden deterministisch optimierbaren Kostenfunktion E(u), wobei die Brillenglasdaten u(x) die räumliche Ausdehnung wenigstens eines in der Brillenfassung (24) gehaltenen Brillenglases (28) beschreiben, und

mit Mitteln zum Festlegen eines Verlaufs eines Rands (26) des Brillenglases (28) oder des linken Brillenglases (28) und des rechten Brillenglases (29) durch Optimieren der Kostenfunktion E(u)

**dadurch gekennzeichnet, dass**

der Kantendetektionsalgorithmus ein speziell auf Brillenkanten mittels Machine Learning Verfahren trainierter Kantendetektor ist, der Brillenfassungskanten von Nicht-Brillenfassungskanten oder äußere von inneren Brillenfassungskanten unterscheiden kann.

10. Verfahren zum Zentrieren eines linken Brillenglases (28) oder eines rechten Brillenglases (29) in eine Brillenfassung (24),

**dadurch gekennzeichnet, dass**

in einem Schritt (i) zu dem Brillenglas (28, 29) Zentrierparameter bestimmt werden, wobei das Bestimmen der Zentrierparameter das Ermitteln der Repräsentation des Rands (26) des Brillenglases (28, 29) mit einem Verfahren nach einem der Ansprüche 1 bis 7 umfasst; und

in einem Schritt (ii) das Brillenglas (28, 29) mit den in Schritt (i) bestimmten Zentrierparametern in die Brillenfassung zentriert wird.

11. Verfahren zum Einschleifen eines linken Brillenglases (28) oder eines rechten Brillenglases (29) in eine Brillenfassung (24),
**dadurch gekennzeichnet, dass**
in einem Schritt (i) zu dem Brillenglas (28, 29) Zentrierparameter bestimmt werden, wobei das Bestimmen der Zentrierparameter das Ermitteln der Repräsentation des Rands (26) des Brillenglases (28, 29) mit einem Verfahren nach einem der Ansprüche 1 bis 7 umfasst; und in einem Schritt (ii) das Brillenglas basierend auf den in Schritt (i) bestimmten Zentrierparametern für eine Anordnung in der Brillenfassung eingeschliffen werden.

12. Verfahren zum Herstellen eines linken Brillenglases (28) oder eines rechten Brillenglases (29), **gekennzeichnet durch** den Verfahrensschritt Einschleifen des Brillenglases in eine Brillenfassung in einem Verfahren nach Anspruch 11.

13. Verfahren zum Herstellen einer Brille, **dadurch gekennzeichnet, dass** ein Verfahren nach einem der Ansprüche 10, 11 oder 12 verwendet wird.

**Claims**

1. Computer-implemented method for ascertaining the representation of the rim (26) of a spectacle lens (28) or of a left spectacle lens (28) and of a right spectacle lens (29) for a spectacle wearer (20),
comprising

providing an image (36) of the spectacle wear (20) having image data b(x) pertaining to the spectacle wearer (20) having a spectacle frame (24) that is worn, and
providing information data I(x) that are data pertaining to information of the image (36) that are calculated from the image data b(x) of the image (36) of the spectacle wearer (20), wherein the information data I(x) comprise an edge information image g(x) (46) ascertained from the captured image data b(x) by means of an edge detection algorithm,
calculating a deterministically optimizable cost function E(u) linking the information data I(x) to spectacle lens data u(x), wherein the spectacle lens data u(x) describe the physical extent of at least one spectacle lens (28) held in the spectacle frame (24),
stipulating a profile of a rim (26) of the spectacle lens (28) or of the left spectacle lens (28) and of the right spectacle lens (29) by optimizing the cost function E(u), **characterized in that**
the edge detection algorithm is an edge detector trained specifically for spectacle edges by means of machine learning methods that is able to distinguish spectacle frame edges from non-spectacle frame edges or outer spectacle frame edges from inner spectacle frame edges.

2. Method according to Claim 1, **characterized in that** the information data I(x) comprise a colour information image (52) ascertained from the captured image data b(x) by means of a colour evaluation algorithm that evaluates the colour of image data b(x).

3. Method according to Claim 1, **characterized in that** the cost function E(u) is a weighted sum of an edge detection cost term $E_g(u)$ and of a colour evaluation cost term $E_f(u)$.

4. Method according to Claim 1 or 3,
**characterized**
**in that** the edge detection algorithm for the edge detection accesses a filter bank having learnt edge detectors.

5. Method according to one of Claims 1 to 4, **characterized in that** the information data I(x) are calculated from detail image data $b_A(x)$ of the image detail (38),
and/or

**in that** the information data I(x) contain data pertaining to a colour model and/or pertaining to an edge image and/or pertaining to a colour probability distribution and/or pertaining to an object in the image (36),

and/or

**in that** the calculating of information data I(x) derived from the image data comprises ascertaining mirroring information data s(x) using an algorithm for detecting mirroring at the spectacle frame or at a spectacle lens received in the spectacle frame or **in that** the calculating of information data I(x) derived from the image data comprises ascertaining mirroring information data s(x) using an algorithm for detecting mirroring at the spectacle frame and at a spectacle lens received in the spectacle frame, wherein the algorithm distinguishes mirroring at the spectacle frame from mirroring at the spectacle lens,

and/or

**in that** the calculating of information data I(x) derived from the image data b(x) comprises ascertaining spectacle lens shape information data di(x) using an algorithm that uses a spectacle lens model supplied to the algorithm or uses a multiplicity of spectacle lens models supplied to the algorithm to specify, as spectacle lens shape information data di(x), a 2D shape or a 3D shape of a spectacle lens (28, 29) able to be held in a spectacle frame (24) and/or a parametric model or a probability-representing map concerning the probability of captured image data b(x) being located on a spectacle lens (28, 29),

and/or

**in that** the calculated information data I(x) derived from the image data b(x) comprise a bridge centre M ascertained by means of a bridge centre detection algorithm,

and/or

**in that** the cost function E(u) for ascertaining the rim of a left spectacle lens (28) and of a right spectacle lens (29) for a spectacle wearer (20) rates a symmetry of spectacle lens data u(x),

and/or

**in that** the cost function E(u) contains at least one model learnt from data by machine learning,

and/or

**in that** the cost function E(u) is convex.

6. Method according to one of Claims 1 to 5, **characterized in that** the provided image data b(x) pertaining to the spectacle wearer (20) are based on images taken from at least two different angles of view.

7. Method according to Claim 6, **characterized in that** the cost function E(u) for ascertaining the rim (26) of a left spectacle lens (28) and of a right spectacle lens (29) for a spectacle wearer (20) rates points in spectacle lens data u(x), imaged onto one another with a stereo condition, to form images that correspond to different recording directions (19) of an image capture device (14, 16, 18).

8. Computer program comprising program code that, when loaded into and executed in a computer system, is designed to perform a method according to one of the preceding claims.

9. Apparatus for ascertaining the profile of the rim of a spectacle lens (28) or of a left spectacle lens (28) and/or of a right spectacle lens (29) for a spectacle wearer (20),

 having at least one image capture device (14, 16, 18) for providing an image (36) of the spectacle wearer (20) having image data b(x) pertaining to the spectacle wearer (20) having a spectacle frame (24) that is worn,
 having means for providing information data I(x) that are data pertaining to information of the image (36) that are calculated from the image data b(x) of the image (36) of the spectacle wearer (20), wherein the information data I(x) comprise an edge information image g(x) (46) ascertained from the captured image data b(x) by means of an edge detection algorithm,
 having means for calculating a deterministically optimizable cost function E(u) linking the information data I(x) to spectacle lens data u(x), wherein the spectacle lens data u(x) describe the physical extent of at least one spectacle lens (28) held in the spectacle frame (24), and
 having means for stipulating a profile of a rim (26) of the spectacle lens (28) or of the left spectacle lens (28) and of the right spectacle lens (29) by optimizing the cost function E(u),
 **characterized in that**
 the edge detection algorithm is an edge detector trained specifically for spectacle edges by means of machine learning methods that is able to distinguish spectacle frame edges from non-spectacle frame edges or outer spectacle frame edges from inner spectacle frame edges.

10. Method for centring a left spectacle lens (28) or a right spectacle lens (29) in a spectacle frame (24),
 **characterized in that**
 a step (i) involves centring parameters being determined for the spectacle lens (28, 29), wherein the determining of the centring parameters comprises ascertaining the representation of the rim (26) of the spectacle lens (28, 29) using a method according to one of Claims 1 to 7; and a step (ii) involves the spectacle lens (28, 29) being centred in the spectacle frame using the centring parameters determined in step (i).

**11.** Method for grinding a left spectacle lens (28) or a right spectacle lens (29) into a spectacle frame (24), **characterized in that**
a step (i) involves centring parameters being determined for the spectacle lens (28, 29), wherein the determining of the centring parameters comprises ascertaining the representation of the rim (26) of the spectacle lens (28, 29) using a method according to one of Claims 1 to 7; and a step (ii) involves the spectacle lens being ground for an arrangement in the spectacle frame on the basis of the centring parameters determined in step (i).

**12.** Method for producing a left spectacle lens (28) or a right spectacle lens (29), **characterized by** the method step of grinding the spectacle lens into a spectacle frame in a method according to Claim 11.

**13.** Method for producing a pair of spectacles, **characterized in that** a method according to one of Claims 10, 11 and 12 is used.


**Revendications**

**1.** Procédé mis en œuvre par ordinateur pour déterminer la représentation du bord (26) d'un verre de lunettes (28) ou d'un verre de lunettes gauche (28) et d'un verre de lunettes droit (29) pour un porteur de lunettes (20) comprenant la

mise à disposition d'une image (36) du porteur de lunettes (20) avec des données d'image b(x) à propos du porteur de lunettes (20) qui porte une monture de lunettes (24), et la
mise à disposition de données d'information I(x), qui sont des données calculées à partir des données d'image b(x) de l'image (36) du porteur de lunettes (20) à propos d'informations de l'image (36), les données d'information I(x) comprenant une image d'information de contour g(x) (46), déterminée à partir des données d'image b(x) acquises au moyen d'un algorithme de détection de contour,
calcul d'une fonction de coût E(u) déterministique optimisable qui combine les données d'information I(x) avec des données de verre de lunettes u(x), les données de verre de lunettes u(x) décrivant l'étendue dans l'espace d'au moins un verre de lunettes (28) maintenu dans la monture de lunettes (24),
fixation d'un tracé d'un bord (26) du verre de lunettes (28) ou du verre de lunettes gauche (28) et du verre de lunettes droit (29) par optimisation de la fonction de coût E(u)
**caractérisé en ce que**
l'algorithme de détection de contour est un détecteur de contour entraîné spécialement sur des contours de lunettes au moyen d'un procédé d'apprentissage automatique, lequel peut différencier des contours de monture de lunettes de contours qui ne sont pas d'une monture de lunettes ou des contours de monture de lunettes externes des internes.

**2.** Procédé selon la revendication 1, **caractérisé en ce que** les données d'information I(x) comprennent une image d'information de couleur (52), déterminée à partir des données d'image b(x) acquises au moyen d'un algorithme d'interprétation de couleur qui interprète la couleur des données d'image b(x).

**3.** Procédé selon la revendication 1, **caractérisé en ce que** la fonction de coût E(u) est une somme pondérée d'un terme de coût de détection de contour $E_g(u)$ et d'un terme de coût d'interprétation de couleur $E_f(u)$.

**4.** Procédé selon la revendication 1 ou 3, **caractérisé en ce que** l'algorithme de détection de contour, pour la détection des contours, accède à une banque de filtres avec détecteurs de contour appris.

**5.** Procédé selon l'une des revendications 1 à 4, **caractérisé en ce que** les données d'information I(x) sont calculées à partir de données d'image de portion $b_A(x)$ de la portion de lunettes (38),
et/ou

**en ce que** les données d'information I(x) contiennent des données à propos d'un modèle de couleur et/ou à propos d'une image de contour et/ou à propos d'une distribution de probabilité de couleur et/ou à propos d'un objet dans l'image (36),

et/ou

**en ce que** le calcul des données d'information I(x) dérivées des données d'image comprend la détermination de données d'informations de réflexion s(x) avec un algorithme pour la reconnaissance de réflexions au niveau de la monture de lunettes ou au niveau d'un verre de lunettes accueilli dans la monture de lunettes, ou **en ce que** le calcul des données d'information I(x) dérivées des données d'image comprend la détermination de données d'informations de réflexion s(x) avec un algorithme pour la reconnaissance de réflexions au niveau de la monture de lunettes et au niveau d'un verre de lunettes accueilli dans la monture de lunettes, l'algorithme différenciant les réflexions au niveau de la monture de lunettes des réflexions au niveau du verre de lunettes,

et/ou

**en ce que** le calcul des données d'information I(x) dérivées des données d'image b(x) comprend la détermination de données d'informations de verre de lunettes di(x) avec un algorithme qui indique en tant que données d'informations de verre de lunettes di(x), à l'aide d'un modèle de verre de lunettes acheminé à l'algorithme ou à l'aide d'une pluralité de modèles de verre de lunettes acheminés à l'algorithme, une forme 2D ou une forme 3D d'un verre de lunettes (28, 29) pouvant être accueilli dans la monture de lunettes (24) et/ou un modèle paramétrique ou une carte représentant des probabilités à propos de la probabilité pour que les données d'image b(x) acquises se trouvent sur un verre de lunettes (28, 29),

et/ou

**en ce que** les données d'information I(x) calculées dérivées des données d'image b(x) comprennent un centre de pontet M déterminé au moyen d'un algorithme de détection de centre de pontet,

et/ou

**en ce que** la fonction de coût E(u), pour la détermination du bord d'un verre de lunettes gauche (28) et d'un verre de lunettes droit (29) pour un porteur de lunettes (20), évalue une symétrie des données de verre de lunettes u(x),

et/ou

**en ce qu'**au moins un modèle appris automatiquement à partir de données est inclus dans la fonction de coût E(u),

et/ou

**en ce que** la fonction de coût E(u) est convexe.

6. Procédé selon l'une des revendications 1 à 5, **caractérisé en ce que** les données d'image b(x) mises à disposition à propos du porteur de lunettes (20) se basent sur des images capturées depuis au moins deux angles d'observation différents.

7. Procédé selon la revendication 6, **caractérisé en ce que** la fonction de coût E(u), pour la détermination du bord (26) d'un verre de lunettes gauche (28) et d'un verre de lunettes droit (29) pour un porteur de lunettes (20), évalue avec une condition stéréoscopique les points représentés les uns au-dessus des autres dans les données de verre de lunettes u(x) à propos d'images qui correspondent à des directions de capture (19) différentes d'un dispositif d'acquisition d'images (14, 16, 18).

8. Programme informatique comprenant un code de programme qui, lorsqu'il est chargé et exécuté dans un système informatique, est conçu pour mettre en œuvre un procédé selon l'une des revendications précédentes.

9. Arrangement pour déterminer le tracé du bord d'un verre de lunettes (28) ou d'un verre de lunettes gauche (28) et/ou d'un verre de lunettes droit (29) pour un porteur de lunettes (20)

comprenant au moins un dispositif d'acquisition d'images (14, 16, 18) destiné à mettre à disposition une image (36) du porteur de lunettes (20) avec des données d'image b(x) à propos du porteur de lunettes (20) qui porte une monture de lunettes (24),

comprenant des moyens destinés à mettre à disposition des données d'information I(x), qui sont des données calculées à partir des données d'image b(x) de l'image (36) du porteur de lunettes (20) à propos d'informations de l'image (36), les données d'information I(x) comprenant une image d'information de contour g(x) (46), déterminée à partir des données d'image b(x) acquises au moyen d'un algorithme de détection de contour,

comprenant des moyens destinés à calculer une fonction de coût E(u) déterministique optimisable qui combine les données d'information I(x) avec des données de verre de lunettes u(x), les données de verre de lunettes u(x) décrivant l'étendue dans l'espace d'au moins un verre de lunettes (28) maintenu dans la monture de lunettes (24), et

comprenant des moyens destinés à fixer un tracé d'un bord (26) du verre de lunettes (28) ou du verre de lunettes gauche (28) et du verre de lunettes droit (29) par optimisation de la fonction de coût E(u)

**caractérisé en ce que**

l'algorithme de détection de contour est un détecteur de contour entraîné spécialement sur des contours de lunettes au moyen d'un procédé d'apprentissage automatique, lequel peut différencier des contours de monture de lunettes de contours qui ne sont pas d'une monture de lunettes ou des contours de monture de lunettes externes des internes.

**10.** Procédé de centrage d'un verre de lunettes gauche (28) ou d'un verre de lunettes droit (29) dans une monture de lunettes (24),
**caractérisé en ce que**

dans une étape (i), des paramètres de centrage sont déterminés à propos du verre de lunettes (28, 29), la détermination des paramètres de centrage comprenant l'identification de la représentation du bord (26) du verre de lunettes (28, 29) avec un procédé selon l'une des revendications 1 à 7 ; et
dans une étape (ii), le verre de lunettes (28, 29) est centré dans la monture de lunettes avec les paramètres de centrage déterminés à l'étape (i).

**11.** Procédé d'ajustement par rectification d'un verre de lunettes gauche (28) ou d'un verre de lunettes droit (29) dans une monture de lunettes (24),
**caractérisé en ce que**
dans une étape (i), des paramètres de centrage sont déterminés à propos du verre de lunettes (28, 29), la détermination des paramètres de centrage comprenant l'identification de la représentation du bord (26) du verre de lunettes (28, 29) avec un procédé selon l'une des revendications 1 à 7 ; et dans une étape (ii), le verre de lunettes est ajusté par rectification pour une disposition dans la monture de lunettes en se basant sur les paramètres de centrage déterminés à l'étape (i).

**12.** Procédé de fabrication d'un verre de lunettes gauche (28) ou d'un verre de lunettes droit (29), **caractérisé par** l'étape d'ajustement par rectification du verre de lunette dans une monture de lunettes dans un procédé selon la revendication 11.

**13.** Procédé de fabrication d'une paire de lunettes, **caractérisé en ce qu'**un procédé selon l'une des revendications 10, 11 ou 12 est utilisé.

Fig.1

Fig.2

Fig.3a

Fig.3b

Fig.3c

Fig.3d

Fig.3e

Fig.3f

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

82

Fig.22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0184222 A1
- DE 102011115239 A1

**In der Beschreibung aufgeführte Nicht-Patentliteratur**

- **D. BORZA et al.** Eyeglasses Lens Contour Extraction from Facial Images Using an Efficient Shape Description. *Sensors*, 2013, vol. 13 (10), 13638-13658
- Spatially Varying Color Distributions for Interactive Multilabel Segmentation. **C. NIEUWENHUIS et al.** IEEE Transactions on Pattern Analysis and Machine Intelligence. IEEE Computer Society, 2013, vol. 35, 1234-1247
- Glasses detection on real images based on robust alignment. **A. FERNANDEZ et al.** Machine Vision and Applications. Springer Verlag, 2015, vol. 26, 519-531
- Automatic Eyeglasses removal from Face Images. **AUS C. WU et al.** IEEE Transactions on Pattern Analysis and Machine Intelligence. IEEE Computer Society, 2004, vol. 26, 332-336
- **C. NIEWENHUIS**. Spatially Varying Color Distributions for Interactive Maulilabel Segmentation. *IEEE Transactions on Pattern Analysis and Machine Intelligence*, 2013, vol. 35 (1)